(19) Europäisches Patentamt
European Patent Office
Office européen des brevets

(11) **EP 1 975 817 A2**

(12) **EUROPEAN PATENT APPLICATION**

(43) Date of publication:
**01.10.2008 Bulletin 2008/40**

(51) Int Cl.:
***G06F 17/30*** (2006.01)

(21) Application number: **08003545.4**

(22) Date of filing: **27.02.2008**

(84) Designated Contracting States:
**AT BE BG CH CY CZ DE DK EE ES FI FR GB GR HR HU IE IS IT LI LT LU LV MC MT NL NO PL PT RO SE SI SK TR**
Designated Extension States:
**AL BA MK RS**

(30) Priority: **27.03.2007 JP 2007082618**

(71) Applicant: **Kabushiki Kaisha Toshiba**
**Minato-ku,**
**Tokyo 105-8001 (JP)**

(72) Inventor: **Wang, Lan**
**c/o Toshiba Corporation, I.P. Division**
**Tokyo 105-8001 (JP)**

(74) Representative: **HOFFMANN EITLE**
**Patent- und Rechtsanwälte**
**Arabellastrasse 4**
**81925 München (DE)**

(54) **Dictionary updating apparatus and computer program product therefor**

(57) In a dictionary updating apparatus (100), based on frequency with which search words are used and relationships among the search keywords, in other words, based on a history of the search keywords, an improvement proposal making unit (10) submits an improvement proposal regarding an element that degrades the quality of classes and properties (e.g., one or more of items are missing; one or more of the items are abnormal; the items have ununiformity; the items have irregularity), the classes and the properties being items constituting existing dictionaries.

## FIG.3

**Description**

CROSS-REFERENCE TO RELATED APPLICATIONS

This application is based upon and claims the benefit of priority from the prior Japanese Patent Application No. 2007-082618, filed on Mar. 27, 2007; the entire contents of which are incorporated herein by reference.

BACKGROUND OF THE INVENTION

1. Field of the Invention

The present invention relates to a dictionary updating apparatus and a computer program product therefor.

2. Description of the Related Art

Conventionally, techniques for giving search feedback to achieve a higher effect in searches have been disclosed. As a specific example, search keywords used in searches are stored while being classified into clusters so that the search keywords in the clusters are recommended to a user in the descending order of the frequency of their use (see, for example, JP-A 2004-078618 (KOKAI)). According to the technique in this example, the clusters of the search keywords are updated according to the state of use of the user. Thus, an advantageous effect is achieved where search keywords that are more likely to be used by the user are recommended to the user.
Also, in these years, to improve the quality of items constituting an ontology (i.e., a dictionary that defines a semantic structure of meta data) used as a search target, another technique has been disclosed for making a proposal that information should be added to a predetermined definition in the ontology by giving feedback based on experience and knowledge of experts. More specifically, a user refers to word-of-mouth information available on the Internet and makes an input of obtained information from a specific resource. The input information is submitted as a proposal that the information should be added to a corresponding item in an existing ontology so that the ontology is expanded (see, for example, "Riyousha kara no FEEDBACK jouhou o mochiita ONTOLOGY kakujuu gijutsu" [ONTOLOGY Expanding Technique using Feedback Information from a User], September 15, 2006, Japanese Society for Artificial Intelligence, Seminar Document SIG-SWO-A303-04).
According to the ontology expanding technique disclosed in "Riyousha kara no FEEDBACK jouhou o mochiita ONTOLOGY kakujuu gijutsu", however, the proposal to add the information is made based on feedback information that is generated by human beings such as the word-of-mouth information available on the Internet. As a result, it is extremely difficult to find missing definitions or abnormal values in the class items and the property items that constitute the existing ontology (i.e., the dictionary). In addition, because users' preferences and ideas vary from one person to another, it is extremely difficult to make uniform the information that is input when the feedback information is generated. Thus, it is necessary to improve the level of uniformity (denoting whether the same definition is used) and the level of regularity (denoting whether the same format is used) among pieces of data in mutually different ontologies (i.e., dictionaries).

SUMMARY OF THE INVENTION

According to one aspect of the present invention, a dictionary updating apparatus includes a dictionary storage unit that stores a plurality of dictionaries each of which defines classes and properties representing a semantic structure of meta data; a similar/related word storage unit that stores similar/related words that are either similar or related to the classes/properties defined in the dictionaries; a search key specifying unit that specifies one or more search keywords used for conducting a search in the dictionaries stored in the dictionary storage unit; a search history storage unit that stores a history of the search keywords specified by the search key specifying unit; a frequently-used search-keyword-set detecting unit that detects a frequently-used search-keyword set including classes and properties that are frequently used by a user when conducting a search, based on the history of the search keywords; a list generating unit that generates a relationship among all of the classes included in the frequently-used search-keyword set, generates a similar class list by referring to the similar/related words with regard to the generated relationship among the classes, and generates a similar property list by referring to the similar/related words with regard to all of the properties included in the frequently-used search-keyword set; an improvement proposal making unit that makes an improvement proposal regarding an element that degrades quality of the classes and the properties constituting the dictionaries, by using the similar class list and the similar property list; and a dictionary updating unit that updates a corresponding portion in the dictionaries according to the improvement proposal.
According to another aspect of the present invention, a dictionary updating apparatus includes a dictionary storage unit that stores a plurality of dictionaries each of which defines classes and properties representing a semantic structure of meta data; a similar/related word storage unit that stores similar/related words that are either similar or related to the classes/properties defined in the dictionaries; a search key specifying unit that specifies one or more search keywords used for conducting a search in the dictionaries stored in the dictionary storage unit; a search conducting unit that conducts the search in the dictionaries stored in the dictionary storage unit, based on the search keywords; a word detecting/presenting unit that detects and presents similar words and related words that are in correspondence with the search keywords, by referring to the similar/related words stored in the similar/related word storage unit; a selected word re-searching unit that conducts the search again in the dictionaries by using the selected word as a criterion keyword, when one of the presented similar words and the presented related words are selected; an access history storage unit that stores as an access history the one of the similar words and the related words in correspondence with the search keywords, together with a number of used times; a frequently-used word-set detecting unit that detects, as a frequently-used word set, a similar word set and a related word set including similar words and related words, respectively that are in correspondence with the search keywords and of which the number of used times is larger than a predetermined threshold value, from the similar words and the related words stored in the access history storage unit; a list generating unit that generates a relationship among the search keywords and the words included in the frequently-used word set, and generates a similar property list by referring to the similar/related words with regard to the generated relationship among the words; an improvement proposal making unit that makes an improvement proposal regarding an element that degrades quality of the classes and the properties constituting the dictionaries, by using the similar property list; and a dictionary updating unit that updates a corresponding portion in the dictionaries according to the improvement proposal.

According to still another aspect of the present invention, a dictionary updating apparatus includes a dictionary storage unit that stores a plurality of dictionaries each of which defines classes and properties representing a semantic structure of meta data; a similar/related word storage unit that stores similar/related words that are either similar or related to the classes/properties defined in the dictionaries; a search key specifying unit that specifies one or more search keywords used for conducting a search in the dictionaries stored in the dictionary storage unit; a search history storage unit that stores a history of the search keywords specified by the search key specifying unit; a frequently-used search-keyword-set detecting unit that detects a frequently-used search-keyword set including classes and properties that are frequently used by a user when conducting a search, based on the history of the search keywords; a search conducting unit that conducts the search in the dictionaries stored in the dictionary storage unit, based on the search keywords; a word detecting/presenting unit that detects and presents similar words and related words that are in correspondence with the search keywords, by referring to the similar/related words stored in the similar/related word storage unit; a selected word re-searching unit that conducts the search again in the dictionaries by using the selected word as a criterion keyword, when one of the presented similar words and the presented related words are selected; an access history storage unit that stores as an access history the one of the similar words and the related words in correspondence with the search keywords, together with a number of used times; a frequently-used word-set detecting unit that detects, as a frequently-used word set, a similar word set and a related word set including similar words and related words, respectively that are in correspondence with the search keywords and of which the number of used times is larger than a predetermined threshold value, from the similar words and the related words stored in the access history storage unit; a list generating unit that detects a common class and a common property each of which is included in both the frequently-used search-keyword set and the frequently-used word set, generates a similar class list by referring to the similar/related words with regard to the detected common class, and generates a similar property list by referring to the similar/related words with regard to the detected common property; an improvement proposal making unit that makes an improvement proposal regarding an element that degrades quality of the classes and the properties constituting the dictionaries, by using the similar class list and the similar property list; and a dictionary updating unit that updates a corresponding portion in the dictionaries according to the improvement proposal.

According to still another aspect of the present invention, a dictionary updating apparatus includes a dictionary storage unit that stores a plurality of dictionaries each of which defines classes and properties representing a semantic structure of meta data; a similar/related word storage unit that stores similar/related words that are either similar or related to the classes/properties defined in the dictionaries; a search key specifying unit that specifies one or more search keywords used for conducting a search in the dictionaries stored in the dictionary storage unit; a search history storage unit that stores a history of the search keywords specified by the search key specifying unit; a frequently-used search-keyword-set detecting unit that detects a frequently-used search-keyword set that is frequently used by a user when conducting a search, based on the history of the search keywords; a list generating unit that generates a word list associated with all of the properties included in the frequently-used search-keyword set; an improvement proposal making unit that makes an improvement proposal regarding an element that degrades quality of the words associated with the properties, by using the word list associated with the properties; and a dictionary updating unit that updates a corresponding portion in the dictionaries according to the improvement proposal.

According to still another aspect of the present invention, a computer program product having a computer readable medium including programmed instructions for updating dictionaries, wherein the instructions, when executed by a computer, cause the computer to perform: storing a plurality of dictionaries each of which defines classes and properties representing a semantic structure of meta data; storing similar/related words that are either similar or related to the classes/properties defined in the dictionaries; specifying one or more search keywords used for conducting a search in the dictionaries; storing a history of the search keywords specified in the specifying; detecting a frequently-used search-keyword set including classes and properties that are frequently used by a user when conducting a search, based on the history of the search keywords; generating a relationship among all of the classes included in the frequently-used search-keyword set, generating a similar class list by referring to the similar/related words with regard to the generated relationship among the classes, and generating a similar property list by referring to the similar/related words with regard to all of the properties included in the frequently-used search-keyword set; making an improvement proposal regarding an element that degrades quality of the classes and the properties constituting the dictionaries, by using the similar class list and the similar property list; and updating a corresponding portion in the dictionaries according to the improvement proposal.

BRIEF DESCRIPTION OF THE DRAWINGS

Fig. 1 is a schematic drawing illustrating an example of a system construction of a data search display system according to a first embodiment of the present invention;
Fig. 2 is a module configuration diagram of a server and clients;
Fig. 3 is a block diagram of a functional configuration of the server;
Fig. 4 is a schematic drawing illustrating an example of a configuration of an ontology;
Fig. 5 is a drawing for explaining an example in which a part of Fig. 4 is expressed in an Extensible Markup Language (XML) format;
Fig. 6 is a schematic drawing illustrating an example of a data structure of a similar-word glossary;
Fig. 7 is a schematic drawing illustrating an example of a data structure of a related-word glossary;
Fig. 8 is a schematic drawing illustrating another example of a data structure of the related-word glossary;
Fig. 9 is a flowchart of a procedure for making an improvement proposal;
Fig. 10 is a front view of a search setting screen;
Fig. 11 is a schematic diagram of a search keyword history;
Fig. 12 is a schematic diagram of search keyword relationships;
Fig. 13 is a schematic drawing illustrating examples of improvement proposals;
Fig. 14 is a front view of a similar/related word displaying screen;
Fig. 15 is a block diagram of a functional configuration of a server according to a second embodiment of the present invention;
Fig. 16 is a flowchart of a procedure for making an improvement proposal;
Fig. 17 is a schematic drawing illustrating a glossary access history;
Fig. 18 is a schematic drawing illustrating relationships among frequently-used word sets;
Fig. 19 is a schematic drawing illustrating examples of improvement proposals;
Fig. 20 is a schematic drawing illustrating an example of an evaluation result;
Fig. 21 is a block diagram of a functional configuration of a server according to a third embodiment of the present invention;
Fig. 22 is a flowchart of a procedure for making an improvement proposal;
Fig. 23 is a schematic drawing illustrating an example of a sum between a frequently-used search-keyword set and a frequently-used word set;
Fig. 24 is a schematic drawing illustrating examples of improvement proposals;
Fig. 25 is a schematic drawing illustrating a search keyword history according to a fourth embodiment of the present invention; and
Fig. 26 is a schematic drawing illustrating examples of improvement proposals.

DETAILED DESCRIPTION OF THE INVENTION

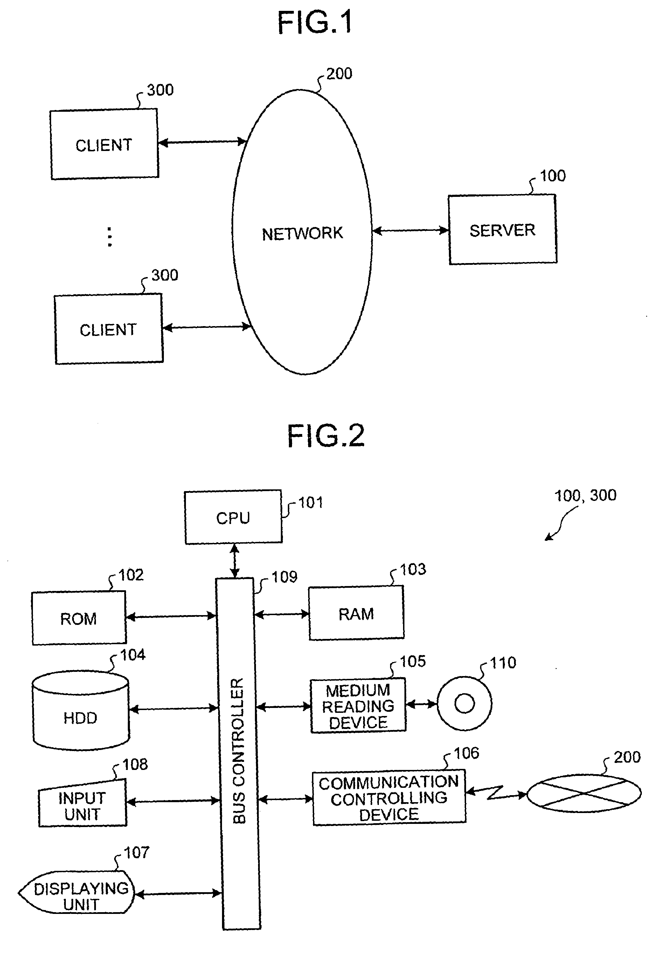

Exemplary embodiments of a dictionary updating apparatus and a computer program product therefor according to the present invention will be explained in detail, with reference to the accompanying drawings.
A first embodiment of the present invention will be explained with reference to Figs. 1 to 14.
First, a system configuration will be explained. As shown in Fig. 1, a data search display system is assumed to be a server-client system in which a plurality of client computers (hereinafter, "clients") 300 are connected to a server computer (hereinafter, "server") 100 via a network 200 like a Local Area Network (LAN). For example, each of the server 100 and the clients 300 is a commonly-used personal computer.

As shown in the module configuration diagram in Fig. 2, each of the server 100 and the clients 300 is configured so as to include: a Central Processing Unit (CPU) 101 that performs information processing; a Read-Only Memory (ROM) 102 that stores therein Basic Input Output System (BIOS) and the like; a Random Access Memory (RAM) 103 that stores therein various types of data in a rewritable manner; a Hard Disk Drive (HDD) 104 that functions as various types of databases and also stores therein various types of programs; a medium driving device 105 such as a Compact Disc Read-Only Memory (CD-ROM) drive that is used for storing information, distributing information to the outside of the server 100 or the clients 300, and obtaining information from the outside of the server 100 or the clients 300 via a storage medium 110; a communication controlling device 106 that transmits and receives information to and from other computers on the outside of the server 100 or the clients 300, through communication via the network 200; a displaying unit 107 such as a Cathode Ray Tube (CRT) or a Liquid Crystal Display (LCD) that displays progress and results of processing to an operator of the server 100 or the clients 300; and an input unit 108 that is a keyboard and/or a pointing device like a mouse used by the operator for inputting instructions and information to the CPU 101. Each of the server 100 and the clients 300 operates while a bus controller 109 arbitrates the data transmitted and received among these functional units.

In each of the server 100 and the clients 300, when the operator turns on the electric power, the CPU 101 runs a program that is called a loader and is stored in the ROM 102. A program that is called an Operating System (OS) and that manages hardware and software of the computer is read from the HDD 104 into the RAM 103 so that the OS is activated. The OS runs other programs, reads information, and stores information, according to an operation by the operator. A typical example of an OS is Windows (registered trademark). Operation programs that run on such an OS are called application programs. Application programs include not only programs that operate on a predetermined OS, but also programs that cause an OS to take over execution of a part of various types of processes described later, as well as programs that are contained in a group of program files that constitute predetermined application software or an OS.

In the server 100, a dictionary updating program is stored in the HDD 104, as an application program. In this regard, the HDD 104 functions as a storage medium that stores therein the dictionary updating program.

On the other hand, in each of the clients 300, a user management processing program is stored in the HDD 104, as an application program. In this regard, the HDD 104 functions as a storage medium that stores therein the user management processing program.

Also, generally speaking, the application programs to be installed in the HDD 104 included in each of the server 100 and the clients 300 can be recorded in one or more storage media 110 including various types of optical discs such as CD-ROMs and Digital Versatile Disks (DVDs), various types of magneto optical disks, various types of magnetic disks such as flexible disks, and media that use various methods such as semiconductor memories, so that the operation programs recorded on the storage media 110 can be installed into the HDD 104. Thus, storage media 110 that are portable, like optical information recording media such as CD-ROMs and magnetic media such as Floppy Disks (FDs), can also be each used as a storage medium for storing therein the application programs. Further, it is also acceptable to install the application programs into the HDDs 104 after obtaining the application programs from an external source via, for example, the communication controlling device 106.

In the server 100, when the dictionary updating program that operates on the OS is run, the CPU 101 performs various types of computation processes and controls the functional units in an integrated manner, according to the dictionary updating program. On the other hand, in each of the clients 300, when the user management processing program that operates on the OS is run, the CPU 101 performs various types of computation processes and controls the functional units in an integrated manner, according to the user management processing program. Of the various types of computation processes performed by the CPU 101 included in each of the server 100 and the clients 300, characteristic processes according to the first embodiment will be explained below.

Each of the clients 300 functions as a user management apparatus by following the user management processing program. Each of the clients 300 outputs, via a Graphic User Interface (GUI), data received from the server 100 to the displaying unit 107 and receives, via the GUI, data and commands based on operations and settings that have been performed and configured by an operator via the input unit 108 on screens displayed on the displaying unit 107, and further transmits the received data and commands to the server 100. The user management processing program realizes various functions according to the authority granted to the operator. As explained in detail later, each of the clients 300 according to the first embodiment becomes able to access the server 100 by following the user management processing program.

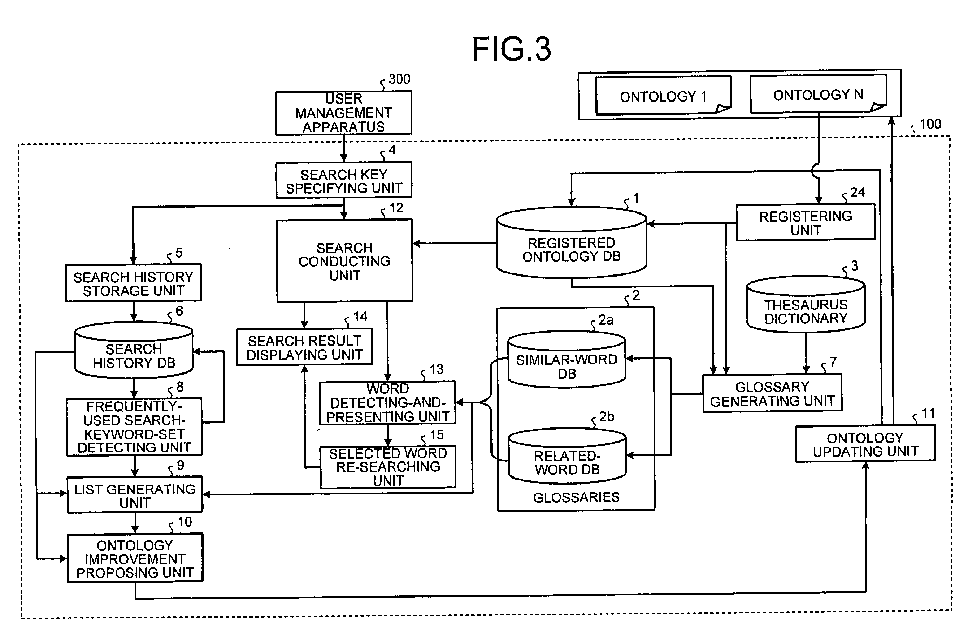

On the other hand, as shown in Fig. 3, the server 100 functions as a dictionary updating apparatus by following the dictionary updating program. The server 100 includes: a registered ontology database (DB) 1 that serves as a dictionary storage unit; glossaries 2 that serve as a similar/related word storage unit; a thesaurus dictionary 3; a search key specifying unit 4; a search history storage unit 5; a search history DB 6; a glossary generating unit 7; a frequently-used search-keyword-set detecting unit 8; a list generating unit 9; an ontology improvement proposing unit 10; an ontology updating unit 11 that serves as a dictionary updating unit; a search conducting unit 12; a word detecting/presenting unit 13; a search result displaying unit 14; a selected word re-searching unit 15; and a registering unit 24. With this configuration, the server 100 makes improvement proposals for existing ontologies by using a history of search keywords. The functional units of the server 100 will be explained below.

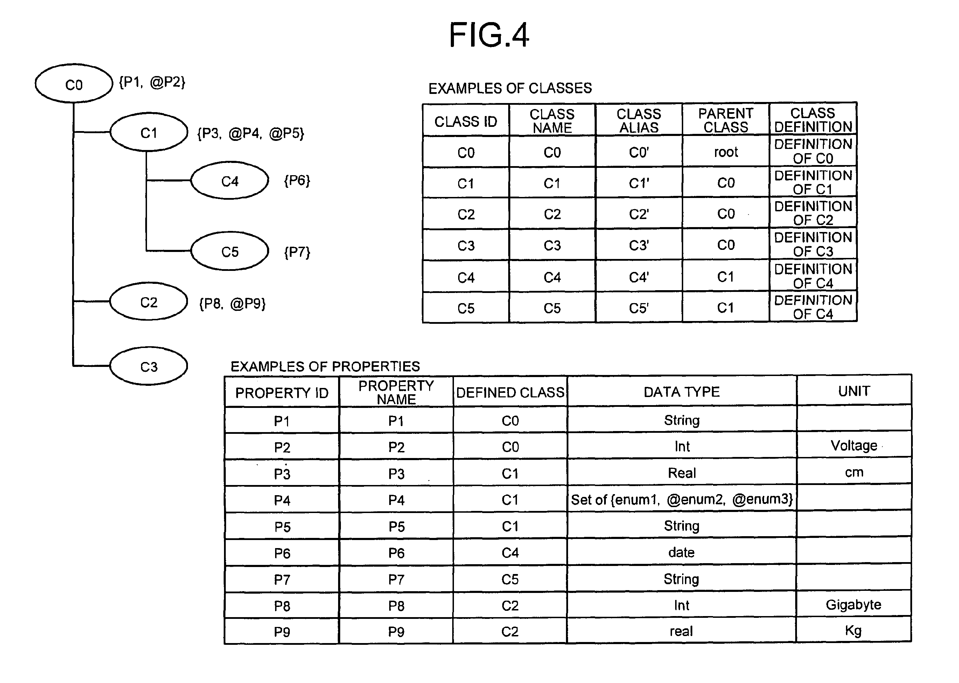

In the registered ontology DB 1, a plurality of ontologies in existing domains are registered via the registering unit 24, while an identifier is attached to each of the ontologies. As shown in Fig. 4, each of the ontologies (i.e., dictionaries each of which defines a semantic structure of meta data) that have been registered in the registered ontology DB 1 is made up of a set of classes having a hierarchical structure and properties defined by the classes. Each of the classes is defined by an attribute set (e.g., name, parent class, etc.). Each of the properties is also defined by an attribute set (e.g., name, data type, unit, etc.). The attribute sets used in each ontology are determined when the ontology is generated. According to the first embodiment, ontologies in which the relationships among the classes and the relationships between classes and properties are defined will be used.

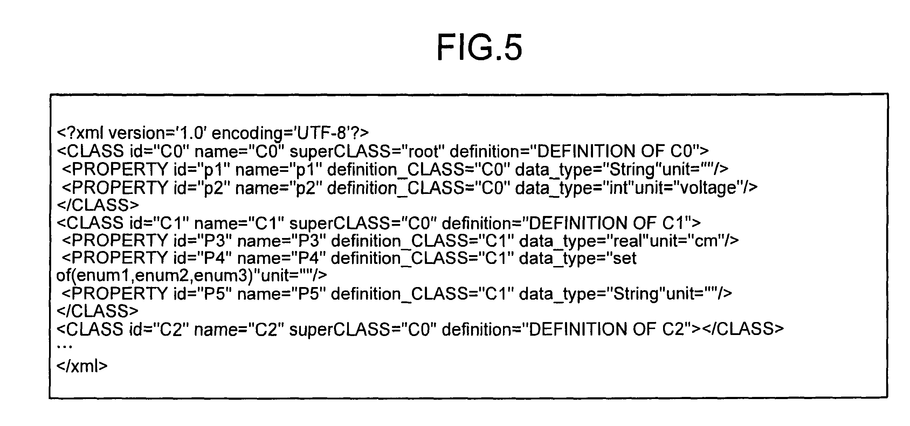

It is possible to express such an ontology by using various formats. In other words, there is no limitation to formats with which ontologies can be expressed. Shown in Fig. 5 is an example in which a part of Fig. 4 is expressed by using an Extensible Markup Language (XML) format. The relationships among the classes are expressed by using an attribute "superclass". For each of the properties, the class to which the property belongs is expressed by using an attribute "definition_class".

The glossaries 2 are generated by the glossary generating unit 7 by using the registered ontology DB 1 and the thesaurus dictionary 3. In the thesaurus dictionary 3, unlike in synonym dictionaries, words are classified from various aspects such as words having a narrower sense and related words (e.g., Word Net). As shown in Fig. 3, the glossaries 2 include two types of glossaries such as a similar-word glossary stored in a similar-word DB 2a and a related-word glossary stored in a related-word DB 2b.

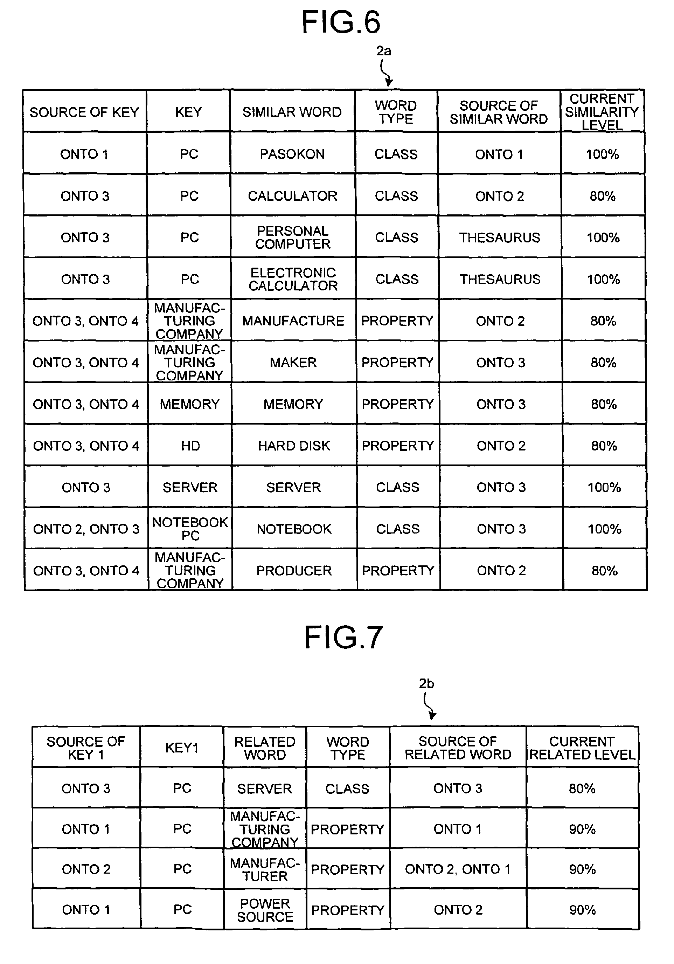

Fig. 6 is a schematic drawing illustrating an example of a data structure of the similar-word glossary stored in the similar-word DB 2a. The similar-word glossary stored in the similar-word DB 2a is generated by using three information sources that will be explained later. In Fig. 6, a similarity level between a word in the column "key" and a word in the column "similar word" is shown in the column "current similarity level". According to the first embodiment, the "current similarity level" is set within a range from 0% to 100%. Next, the three information sources that are used for generating the similar-word glossary stored in the similar-word DB 2a will be explained.

(1) A method in which an alias for an ontology definition is used:

In an ontology, when a class item or a property item is defined, in addition to a name that is actually used, an alias may be defined in some situations. In a configuration example of an ontology shown in Fig. 4, each class is defined by using two columns such as one column for a class name and the other column for an alias. More specifically, in an ontology in which aliases and the like are defined, it is possible to generate the similar-word glossary by using item names (i.e., the class names) and the corresponding aliases. The similarity level between an item name (i.e., a class name) and its alias is 100%.

(2) A method in which similar items between ontologies are detected and a definition name is used:

Similar items between ontologies are detected by comparing the contents of the attributes that define the items. More specifically, the similarity level between items is calculated based on the degree to which their attributes are close to each other. In other words, it is possible to generate the similar-word glossary by using two similar items that have been detected.

(3) A method in which similar items in the thesaurus dictionary 3 are used:

With respect to each item name, a similar word is detected out of the thesaurus dictionary 3. In a case where the detected similar word is not stored in the similar-word DB 2a, the detected similar word is added to the similar-word DB 2a as a similar word. Any word that has been detected out of the thesaurus dictionary 3 has a similarity level of 100% by default.

Fig. 7 is a schematic drawing illustrating an example of a data structure of the related-word glossary stored in the related-word DB 2b. In the related-word glossary stored in the related-word DB 2b, only class words defined in the ontologies are defined. The related-word glossary stored in the related-word DB 2b is generated by using the following two methods:

(1) A method in which the registered ontology DB 1 is used:

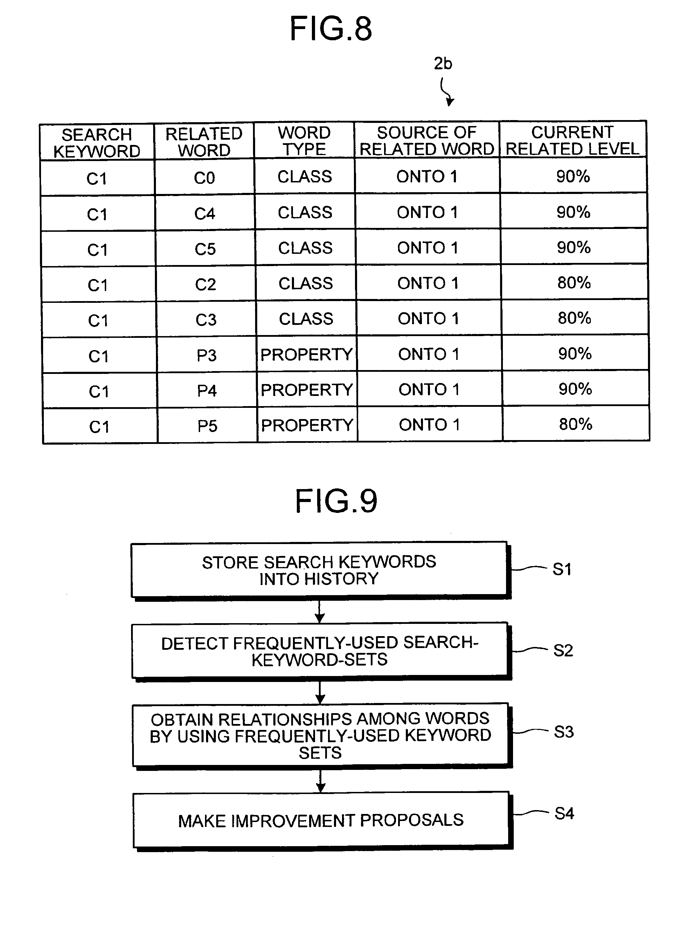

In a case where a class having a parent-child relationship and a class having a sibling relationship exist in an ontology structure that defines a class, the class names used by the parent-child relationship class and the sibling relationship class each serve as a related word. Also, property names used by the parent-child relationship class and the sibling relationship class each serve as a related word of the class names used by the parent-child relationship class and the sibling relationship class. In the example of the configuration of an ontology shown in Fig. 4, related words of the word C1 are, as shown in Fig. 8, C0, C4, and C5, which are the words being the names of the parent-child classes; C2 and C3, which are the words being the names of the sibling classes; and P3, P4, and P5, which are the names of the properties used by C1. The related words are not limited to the classes having the parent-child relationship or the sibling relationship with the class. It is acceptable to use the names of the classes and the properties that are positioned two or more hierarchical levels above or below the class. The related level is set within a range from 0% to 100%. For a parent-child class of a class and for each of properties used by the class, the related level is set to 90% by default. For a sibling class of a class, the related level is set to 80%. The related levels are updated according to the state of use of the user. Also, when classes having the same word in common are defined in a large number of ontologies, the information of the ontologies is registered into the related-word glossary stored in the related-word DB 2b.

(2) A method in which the thesaurus dictionary 3 is used:

In this method, related words are registered into the related-word DB 2b by using the thesaurus dictionary 3. More specifically, by using a class item word, related words are searched and obtained out of the thesaurus dictionary 3. In a case where each related word obtained as a search result has not been registered as a related word of the class, the related word is registered into the related-word glossary stored in the related-word DB 2b after setting the related level thereof to 100%.

Next, a procedure for making improvement proposals for existing ontologies by using a search keyword history will be explained. Functional units of the server 100 other than the ones explained above will be explained by following this procedure.

Fig. 9 is a flowchart of the procedure for making an improvement proposal for the existing ontologies by using the search keyword history. As shown in Fig. 9, the procedure for making the improvement proposal for the existing ontologies by using the search keyword history includes the following four steps:

Step S1: Store search keywords into a search history;
Step S2: Detect frequently-used search-keyword-sets out of the search history;
Step S3: Obtain relationships among the search keywords by using the frequently-used keyword sets;
Step S4: Make improvement proposals by using the obtained search keywords.

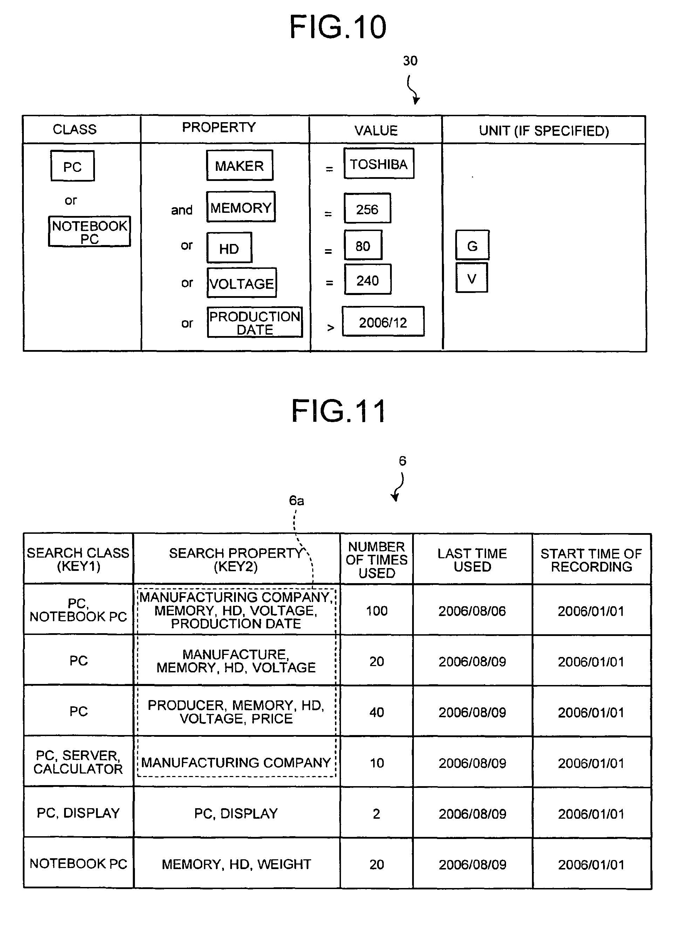

Next, the details of each of the steps will be explained.
Step S1: Store search keywords into a search history
The search key specifying unit 4 causes the client 300 to display a search setting screen 30 as shown in Fig. 10. In other words, the user accesses the registered ontologies via the search setting screen 30 provided by the search key specifying unit 4.
Users who access the server 100 can be classified into groups by using the following two classification methods according to their purposes of accessing the ontologies:

(i) The users are classified into a group of users who are interested in instances of ontologies and a group of users who are interested in meta data. In other words, the users are classified into "meta data related users" and "instance related users".
(ii) The users are classified into groups according to the fields of the ontologies; for example, the electrical field, the mechanical field, and the chemical field.

It is possible to use, at the same time, the user classification (i) based on users' interests in the meta data and the instances in the ontologies and the user classification (ii) based on the fields. Each of the users registers himself/herself by selecting one of the classifications (i) and (ii) to which he/she belongs. Further, another arrangement is acceptable in which the users apply more detailed classifications so that the client 300 manages the users.
On the search setting screen 30 shown in Fig. 10, four areas such as the class, the property, the value (i.e., the value of the property), and the unit (the unit of the property) are specified. The user specifies criteria from the corresponding areas. The search criteria have a Boolean relationship expressed with an "AND" or an "OR". The user specifies the criteria by selecting one of the relationships, namely, either a relationship expressed with an "AND" or the relationship expressed with an "OR".

The search keywords that have been specified into the search key specifying unit 4 via the search criteria (for example, the class, the property etc.) on the search setting screen 30 are stored into the "search keyword history" in the search history DB 6 as shown in Fig. 11 by the search history storage unit 5.

The contents of all of the classes that have been input through the class area of the search criterion on the search setting screen 30 are stored into the "search class" column in the "search keyword history" in the search history DB 6 shown in Fig. 11. Also, all of the properties that have been input through the property area of the search criterion on the search setting screen 30 are stored into the "search property" column in the "search keyword history" in the search history DB 6 shown in Fig. 11. In Fig. 11, indicated with a reference character 6a in an area marked with a broken line are examples of search criteria (properties) that have been specified on the search setting screen 30 shown in Fig. 10. Also, regardless of the Boolean relationships among the keywords, the number of times each of the class keywords and the property keywords has been used as a search criterion is stored in the "number of times used" column in the "search keyword history" in the search history DB 6 shown in Fig. 11. The "recording start time" in the "search keyword history" stored in the search history DB 6 shown in Fig. 11 denotes a time at which the recording of the search-keyword-set was started.

The mode of the "search keyword history" stored in the search history DB 6 is not limited to the example shown in Fig. 11. For example, another arrangement is acceptable in which one property keyword is stored in correspondence with each of the class keywords that have been specified.

Step S2: Detect frequently-used search-keyword-sets out of the search history

The frequently-used search-keyword-set detecting unit 8 detects frequently-used search-keyword-sets. In the following section, a method for detecting a keyword (i.e., a frequently-used keyword) that is frequently used by a user when conducting a search and related frequently-used keyword sets will be explained, with reference to the search history DB 6 shown in Fig. 11. Search keywords include class keywords and property keywords. Thus, to detect the frequently-used search-keyword-sets, the following procedure is taken:

(A) Detect frequently-used class keywords; and
(B) Detect frequently-used property keywords for the class keywords.

A: Detect frequently-used class keywords

First, the procedure for detecting the frequently-used class keywords will be explained.

(1) For each of the class search keywords, frequency with which the class search keyword is used (called "term frequency (tf)") is calculated. Based on the frequency with which each of the class search keywords is used, keywords that have a frequency value larger than a predetermined frequency threshold value $\alpha$ are detected. The frequency threshold value $\alpha$ is variable depending on, for example, the number of pieces of search history data that have been collected. The keywords that have a frequency value larger than the frequency threshold value $\alpha$ are added to a frequently-used class keyword list L1. The frequently-used class keyword list L1 can be expressed as below:

$$\text{L1} = \{\text{k1, k2, k3, k4 . . . }\}.$$

(2) For each of the keywords Ks in the frequently-used keyword list L1, a detection process is performed until a local maximum frequently-used set in which the number of keywords including K becomes the largest is detected. This detection process will be explained in detail with a specific example. Example: To detect a local maximum frequently-used set for the keyword k1 included in L1

(i) A value of the frequency with which two keywords are used, which is expressed as (tf2 (k1, X)), is calculated. Like at step (1), when there is a set that has a frequency value larger than a predetermined frequency threshold value $\beta$, the set is detected as a frequently-used set. The frequency threshold value $\beta$ is set so as to be smaller than the frequency threshold value $\alpha$. For example, the following is obtained:

$$\text{L2(k1)} = \{(\text{k1, h1}), (\text{k1, h2})\}.$$

(ii) For each of the elements K2s included in the frequently-used class keyword list L2, a frequency value Tf3() with which three keywords including K2 are used is calculated. Like in the example above, when there is a frequently-used class keyword list L3 based on a predetermined frequently-used threshold value y, a frequently-used set is detected. For example, the following is obtained:

$$\mathrm{L3\,(k1)} = \bigl\{ \mathrm{(k1,\ h1,\ j11),\ (k1,\ h1;\ j12),\ (k2,\ h2,\ j2)} \bigr\}.$$

(iii) By using the same method as in (2) and (3) above, calculations are performed up to a local maximum class keyword list Lm (which denotes a case in which the number of keywords is the largest). For example, the following is obtained:

$$\mathrm{Lm = L4\,(k1)} = \bigl\{ \mathrm{(k1,\ h1,\ j11,\ i1),\ (k1,\ h1,\ j11,\ i2)} \bigr\}.$$

(iv) A frequently-used class keyword set for the class search keyword k1 expressed as L(k1) is detected.

$$\mathrm{L\,(k1)} = \bigl\{ \mathrm{L1\,(k1),\ L2\,(k1),\ L2\,(k1),\ L3\,(k1)\ .\ .\ .\ Lm\,(k1)} \bigr\}.$$

(3) The procedure at step (2) is processed in a loop, so that a frequently-used search-keyword-set L(k) is detected for each of all the keywords included in L1. When keywords that are completely the same as a frequently-used search-keyword-set that has already been detected are used, it is possible to obtain a frequently-used search-keyword-set without performing any calculation.

By using the method described above, it is possible to detect the frequently-used class keywords set as shown below, with the example of the "search keyword history" stored in the search history DB 6 shown in Fig. 11.

(1) Frequency with which one search keyword is used is calculated so as to obtain L1. When the following settings are applied:

tf(PC)=100+30+40+2=172
tf(SERVER)=10
tf(CALCULATOR)=10
tf(NOTEBOOK PC)=100+20=120
tf(DISPLAY)=2
the frequency threshold value $\alpha$=10,
the following is obtained:
L1=(PC, CALCULATOR, NOTEBOOK PC, SERVER).

(2) A frequently-used class keyword set L(PC) is obtained for the keyword "PC" in L1.

(i) When the following settings are applied:

Tf2(PC, NOTEBOOK PC)=100
Tf2(PC, SERVER)=10
Tf2(PC, CALCULATOR)=10
Tf2(PC, DISPLAY)=2
the frequency threshold $\beta$=5,
the following is obtained:
L2(PC)={(PC, NOTEBOOK PC), (PC, SERVER), (PC, CALCULATOR)},

(ii)

Tf3(PC, NOTEBOOK PC, CALCULATOR)=10
L3(PC)={(PC, NOTEBOOK PC, CALCULATOR)}

This is a local maximum frequently-used set for "PC".

(iii)
In other words, the frequently-used class keyword set for PC is obtained as below:

```
L(PC)={L2(PC), L3(PC)}
      ={(PC, NOTEBOOK PC), (PC, SERVER), (PC, CALCULATOR),
{PC, NOTEBOOK PC, CALCULATOR}}.
```

(3) The same calculation method as the one used at step (2) is used to obtain the following:

```
L(CALCULATOR)={(PC, CALCULATOR), {PC, NOTEBOOK PC,
CALCULATOR}}.
```

In this situation, because (PC, CALCULATOR) is included in L(PC), they can be used as they are.

```
L(NOTEBOOK PC)={(PC, NOTEBOOK PC)}
```

In this situation, because the set (PC, NOTEBOOK PC) is included in L(PC), it can be used as it is.
L (SERVER) ={ (PC, SERVER)}

In this situation, because the set (PC, SERVER) is included in L(PC), it can be used as it is.

B: Procedure to detect frequently-used property keywords

By using the frequently-used class keyword set for the keywords, namely, L1={k1, k2, k3, k4 . . . } that has been detected above, a frequently-used property set that corresponds to each keyword k is detected.

Based on the search keyword history, a frequency value tf(prop) with which each of the property keywords in a property set is used is calculated, the property set being in correspondence with all the class sets in which the search keyword k is used. Any property that has a high frequency value Tf is considered to be a frequently-used property of the search class K. By using the example of the "search keyword history" stored in the search history DB 6 in Fig. 11, this procedure will be explained in detail below.

As explained above, the detected frequently-used class keyword list L1 is expressed as below:

L1=(PC, CALCULATOR, NOTEBOOK PC, SERVER). A method for detecting a frequently-used property search keyword for the search keyword "PC" will be explained below:

(1) First, all search properties that contain "PC" in the search class column are detected. In the example of the search history DB 6 shown in Fig. 11, a sum of all the properties indicated with the reference character 6a is detected. In other words, the following is obtained:

{MANUFACTURING COMPANY, MEMORY, HD, VOLTAGE, PRODUCTION DATE, MANUFACTURE, PRODUCER, PRICE}.

(2) The frequency with which each of the property keywords is used is calculated. For example, the following is obtained:

tf(MANUFACTURING COMPANY)=112
tf (MEMORY) =170
tf(HD)=170
tf(VOLTAGE)=160

tf(PRODUCTION DATE) =100
tf(MANUFACTURE)=20
tf(PRODUCER)=40
tf(PRICE)=50.

(3) The property keywords having a high frequency value are added to a frequently-used property set. The frequently-used properties each have a frequency value that is higher than a predetermined threshold value. The threshold value can be set in a variable manner. With the example of the search history DB 6 shown in Fig. 11, when the threshold value is set to "20", all the properties shown above are frequently-used properties. In other words, a frequently-used property set P is expressed as below:

P={ MANUFACTURING COMPANY, MEMORY, HD, VOLTAGE, PRODUCTION DATE, MANUFACTURE, PRODUCER, PRICE}.

By using the method described above, it is possible to obtain the frequently-used search-keyword-sets (i.e., the frequently-used class keyword set and the frequently-used property set).

Step S3: Analyze relationships among the search keywords

At step S3, the list generating unit 9 analyzes the relationships among the search keywords by using the frequently-used class keyword set and the frequently-used property set that have been detected in the analysis process above. More specifically, the relationships are analyzed for the class words included in the frequently-used class keyword set.

First, by using the frequently-used class keyword set, a search keyword relationship diagram in which the relationships among the classes are shown is generated. It is assumed that all of the class elements included in the frequently-used class keyword set are related to the class in question.

In the following section, this procedure will be explained by using the example of the frequently-used class keyword L(PC) described above.

$$L(PC) = \{L2(PC), L3(PC)\}$$

$$= \{(PC, NOTEBOOK PC), (PC, SERVER), (PC, CALCULATOR),$$
$$\{PC, NOTEBOOK PC, CALCULATOR\}\}.$$

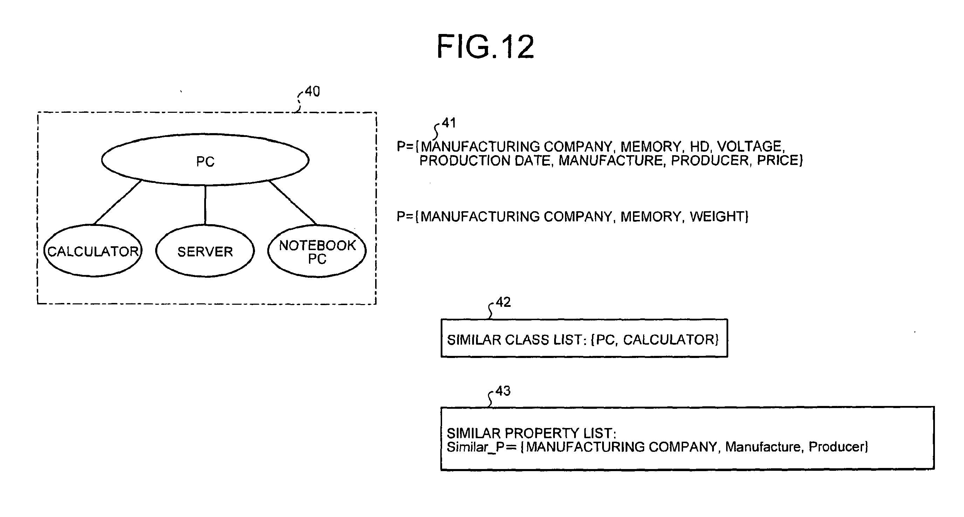

Fig. 12 is a schematic diagram of search keyword relationships in the frequently-used class keyword L(PC). In Fig. 12, the reference character 40 indicates the class relationships in the frequently-used class keyword L(PC). Also, the frequently-used property set P indicated with the reference character 41 in Fig. 12 shows properties of the class "PC". In other words, P shown below represents the properties of the class "PC":

$$P = \{MANUFACTURING COMPANY, MEMORY, HD, VOLTAGE,$$
$$PRODUCTION DATE, MANUFACTURE, PRODUCER, PRICE\}.$$

Next, by referring to the search keyword relationships shown in Fig. 12, similar words are detected by using the glossaries 2 (e.g., the similar-word glossary stored in the similar-word DB 2a) as shown in Fig. 6. More specifically, for all of the class words included in the frequently-used class keyword set, a similar class list is generated to show a group of similar words. Also, for all of the property words included in the frequently-used property set, a similar property list is generated.

With the example of the glossaries 2 (e.g., the similar-word glossary stored in the similar-word DB 2a) as shown in Fig. 6, the class "PC" and the class "calculator" indicated with the class relationship 40 in Fig. 12 are similar words. Thus, a similar class list 42 as shown in Fig. 12 is generated. Similarly, the properties "manufacturing company", "manufacture", and "producer" that are included in the frequently-used property set 41 in Fig. 12 are similar words. Thus, a similar property list 43 as shown in Fig. 12 is generated.

Step S4: Make improvement proposals

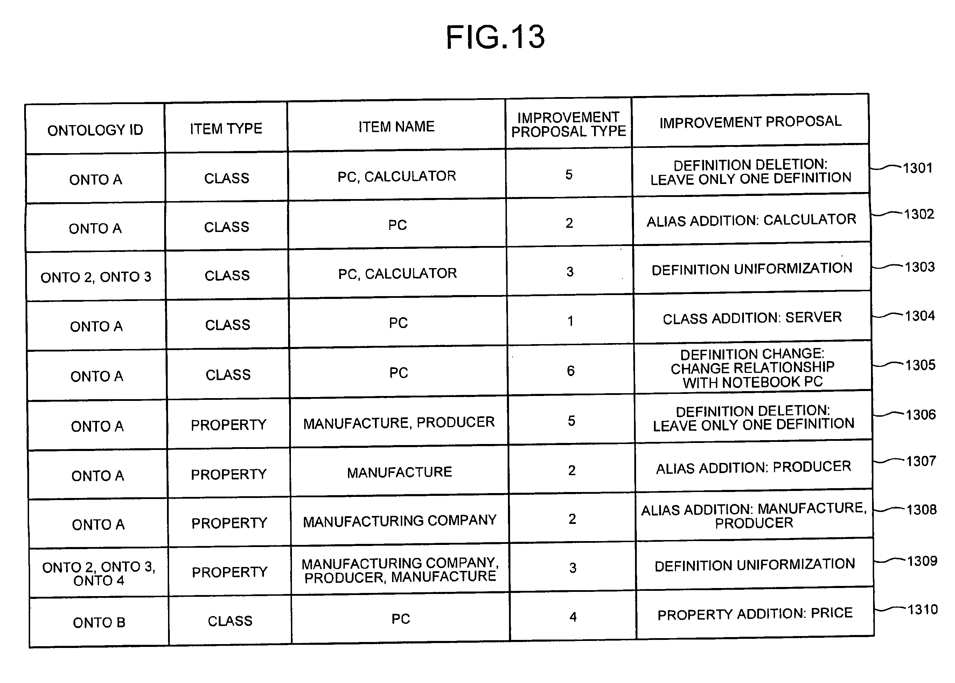

At step S4, by using the search keyword relationship diagram and the similarity lists (i.e., the similar class list 42 and the similar property list 43) that have been generated at step S3, the ontology improvement proposing unit 10 makes improvement proposals for the existing ontologies. According to the first embodiment, the improvement proposals can be classified into the following six types as shown in Fig. 13:

[Type 1] class addition: to add a class;
[Type 2] alias addition: to add an alias to a class or to a property;
[Type 3] definition uniformization: to have an arrangement so that similar classes (or similar properties) in mutually different ontologies have the same definition in common;
[Type 4] property addition: to add a property;
[Type 5] definition deletion: to delete an unnecessary class or an unnecessary property if the definitions of a class or a property are duplicate;
[Type 6] definition change: to change the relationships between classes.

Next, a method for making the improvement proposals for the existing ontologies will be explained.
First, the method will be explained by using the class relationships shown in Fig. 12.

(1) By using the similar class list 42, the ontology improvement proposing unit 10 checks to see if similar classes are defined at the same time in one of the ontologies (e.g., Onto A). In a case where two or more similar classes are defined at the same time in the one of the ontologies (e.g., Onto A), the ontology improvement proposing unit 10 automatically makes an improvement proposal that the class definitions except for one class should be deleted. In addition, the ontology improvement proposing unit 10 makes another improvement proposal that the words of the deleted classes should be added to the remaining class as its aliases. These improvement proposals are made for each of the ontologies. Another arrangement is acceptable in which improvement proposals for each of the ontologies are made and collected together before being collectively submitted to the ontologies. With the example of the class relationships shown in Fig. 12, it is understood that the class "PC" and the class "CALCULATOR" are similar words. Thus, in the one of the ontologies (e.g., Onto A), it is desirable if only one of the classes between "PC" and "CALCULATOR" is defined. Accordingly, the ontology improvement proposing unit 10 makes an improvement proposal 1301 shown in Fig. 13 that one of the classes should be deleted. Further, the ontology improvement proposing unit 10 makes an improvement proposal 1302 shown in Fig. 13 that the word "CALCULATOR" should be added to the class "PC" as its alias.
(2) For example, it is assumed that in the ontology Onto A, a class ClsA included in the frequently-used class keyword set is defined. In this situation, the ontology improvement proposing unit 10 automatically makes an improvement proposal that a class item that is similar to the class ClsA included in the frequently-used class keyword set should be registered as an alias of the ClsA item. With the class relationships shown in Fig. 12, "PC" and "CALCULATOR" are similar words. Thus, the ontology improvement proposing unit 10 makes the improvement proposal 1302 as shown in Fig. 13 that in any ontology in which "PC" is defined, "CALCULATOR" should be added as its alias, and also, in a similar manner, in any ontology in which "CALCULATOR" is defined, "PC" should be added as its alias.
(3) In a case where similar classes are defined in mutually different ontologies, the ontology improvement proposing unit 10 makes an improvement proposal that the similar class items in these ontologies should have the same definition in common. For example, in a case where the class "PC" is defined in Ontology 2 whereas the class "CALCULATOR" is defined in Ontology 3, because "PC" and "calculator" are similar classes in the example of the class relationships shown in Fig. 12, the ontology improvement proposing unit 10 makes an improvement proposal 1303 as shown in Fig. 13 that these classes should have the same definition in common.
(4) By referring to the class relationships, the ontology improvement proposing unit 10 makes an improvement proposal that a class that has a relationship with a class item defined in any of the existing ontologies should be in a parent-child relationship or a sibling relationship with the class item. In the example of the class relationships shown in Fig. 12, the class "PC", the class "SERVER", and the class "NOTEBOOK PC" have a relationship with one another. Thus, in a case where one of these three classes is defined in the ontology Onto A, the other two classes should be each in a parent-child relationship or a sibling relationship with the one of the classes. For example, in a case where the class "PC" is defined, it is checked to see if the class "SERVER" and the class "NOTEBOOK PC" are each defined as a class that is in a parent-child relationship or a sibling relationship with "PC". If "SERVER" and "notebook PC" are not defined, there is a possibility that the definition is missing. Thus, the ontology improvement proposing unit 10 makes an improvement proposal 1304 as shown in Fig. 13 that these classes should be added.

As another example, there may be a situation in which all of the classes included in the frequently-used class search set are defined in the ontology Onto A, although the relationships among the classes are different. For example, in a case where the class "PC" is not defined so as to be in a parent-child relationship or a sibling relationship with the class "SERVER" and the class "NOTEBOOK PC" in the existing ontology Onto A, the ontology improvement proposing unit 10 makes an improvement proposal 1305 as shown in Fig. 13 that the relationships among the classes in the ontology should be corrected.

The following explanation is based on the property relationships shown in Fig. 12.

(1) In a case where there are similar property items in an existing ontology (e.g., Onto A), in other words, in a case where there is at least one similar property list 43 in Fig. 12, the ontology improvement proposing unit 10 automatically checks to see if properties included in the similar property list 43 have been defined. If the similar properties are defined in the ontology Onto A, the ontology improvement proposing unit 10 makes an improvement proposal that only one property should remain. Further, the ontology improvement proposing unit 10 makes another improvement proposal that the deleted properties should be added to the remaining property as its aliases. With the example of the property relationships shown in Fig. 12, the properties "MANUFACTURING COMPANY", "MANUFACTURE", and "PRODUCER" are similar words. Because it is possible to define only one of these three properties in each ontology, when two or more properties are defined, the ontology improvement proposing unit 10 makes an improvement proposal 1306 as shown in Fig. 13 that only one of the properties should remain. Further, the ontology improvement proposing unit 10 makes an improvement proposal 1307 as shown in Fig. 13 that the names of the deleted properties should be added to the remaining property as its aliases.

(2) In a case where only one similar item is defined, the ontology improvement proposing unit 10 automatically makes an improvement proposal that another similar word should be additionally defined as an alias of the item. With the example of the property relationships shown in Fig. 12, "MANUFACTURING COMPANY", "MANUFACTURE", and "PRODUCER" are similar words. Thus, when the definitions are included in an ontology, the ontology improvement proposing unit 10 makes an improvement proposal 1308 as shown in Fig. 13 that these words each should be mutually added as an alias.

(3) In a case where similar properties are defined in mutually different ontologies, the ontology improvement proposing unit 10 automatically makes an improvement proposal that the similar properties have the same definition in common. With the example of the property relationships shown in Fig. 12, the ontology improvement proposing unit 10 makes an improvement proposal 1309 that the definitions of "MANUFACTURING COMPANY", "MANUFACTURE", and "PRODUCER" are the same as one another.

(4) The ontology improvement proposing unit 10 checks to see if all of the properties included in the frequently-used property set in the existing ontology Onto A are defined in a corresponding class in Onto A. In a case where the corresponding class in the ontology Onto A does not define all of the properties, the ontology improvement proposing unit 10 automatically makes an improvement proposal that one or more undefined properties should be additionally defined in the corresponding class in the ontology Onto A. With the example of the property relationships shown in Fig. 12, the properties {MANUFACTURING COMPANY (or MANUFACTURE, or PRODUCER), MEMORY, HD, VOLTAGE, PRODUCTION DATE, PRICE} should be defined in the class "PC". In other words, when the class "PC" is defined in the existing ontology Onto A, the ontology improvement proposing unit 10 automatically detects the properties used by the class and compares the detected properties with the frequently-used property set. When any of the elements in the frequently-used property set is not defined in the ontology Onto A, the ontology improvement proposing unit 10 makes an improvement proposal 1310 as shown in Fig. 13 that the properties with which the definitions are missing should be added.

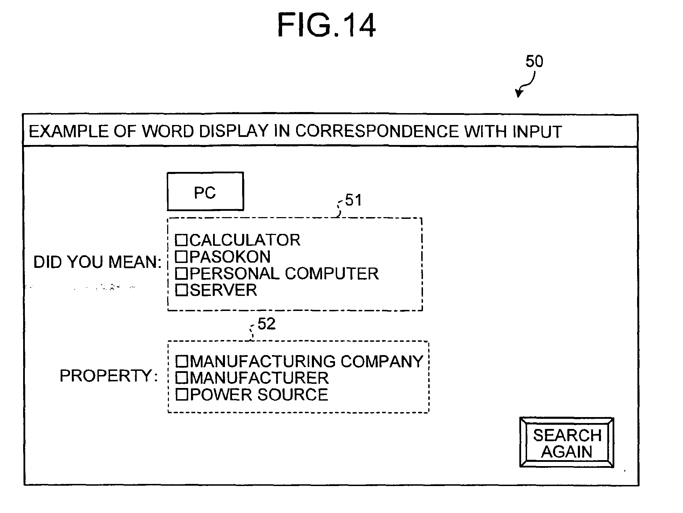

Thus completes the explanation of the ontology improvement proposing unit 10. The improvement proposals made by the ontology improvement proposing unit 10 are forwarded to the ontology updating unit 11.
The ontology updating unit 11 automatically or semiautomatically updates corresponding portions of corresponding ontologies, according to the improvement proposals made by the ontology improvement proposing unit 10.
Accordingly, when the existing ontologies are updated according to the improvement proposals made by the ontology improvement proposing unit 10, the updated ontologies are registered into the registered ontology DB 1 via the registering unit 24. Thus, the glossaries 2 are also updated according to the improvement proposals made by the ontology improvement proposing unit 10.
The search conducting unit 12 conducts a search in the ontologies registered in the registered ontology DB 1, based on the search keyword specified into the search key specifying unit 4 via the search criteria (e.g., a class or a property) shown on the search setting screen 30. The search result displaying unit 14 displays a search result obtained by the search conducting unit 12.
Also, the word detecting/presenting unit 13 receives the search keywords from the search conducting unit 12 and detects similar words and related words that correspond to the search keywords, out of the glossaries 2. The word detecting/presenting unit 13 then displays a similar/related word displaying screen 50 as shown in Fig. 14 on the client 300 used by the user so as to present similar words 51 and related words 52. When the words are presented to the user via the similar/related word displaying screen 50, the similar words and the related words are not distinguished from each other, but the words are presented after being classified into a class type and a property type. When the user has selected a necessary word from the presented similar/related word displaying screen 50, the selected word re-searching unit 15 conducts a search again in the ontologies registered in the registered ontology DB 1 by using the selected word as a criterion keyword. The search result displaying unit 14 displays a search result obtained by the selected word re-searching unit 15. With this arrangement, the user is able to select a word in which he/she is interested from the presented similar/related word displaying screen 50 and conducts a search again by using the selected word together with the search criteria input from the search setting screen 30 shown in Fig. 10.

As explained above, according to the first embodiment, it is possible to provide a support so that the quality of the ontologies can be improved by making the improvement proposals regarding the elements (e.g., one or more of items are missing; one or more of the items are abnormal; the items have ununiformity; the items have irregularity) that may degrade the quality of the classes or the properties that are the items constituting the existing ontologies, based on the frequency with which the search keywords are used and the relationships among the search keywords, in other words, based on the history of the search keywords.

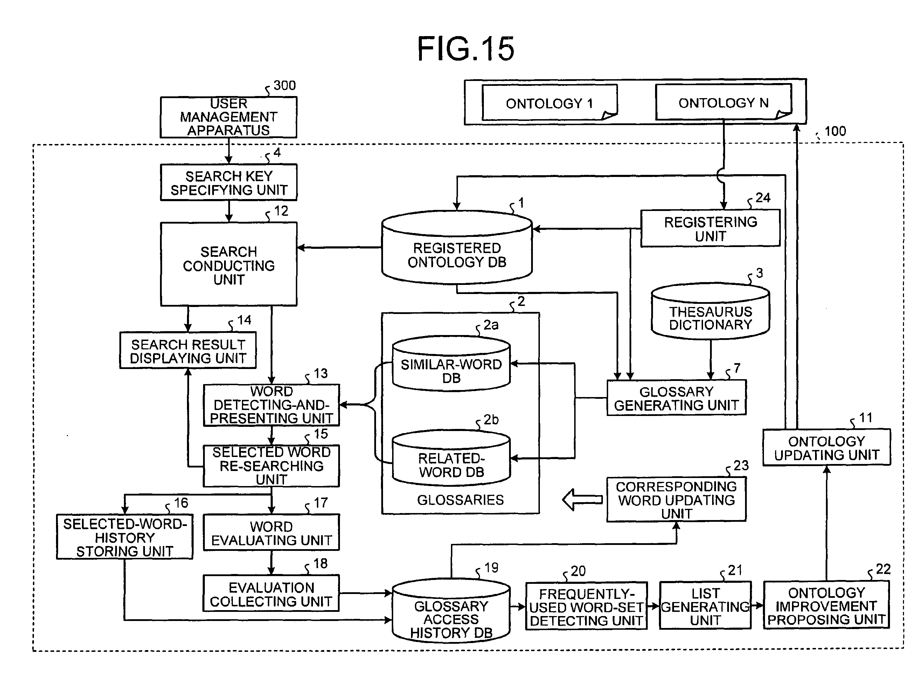

Next, a second embodiment of the present invention will be explained with reference to Figs. 15 to 20. The functional units that are the same as those in the first embodiment will be referred to by using the same reference characters, and the explanation thereof will be omitted.

The second embodiment is related to a method for making improvement proposals for the existing ontologies by using a glossary access history.

As shown in Fig. 15, the server 100 functions as a dictionary updating apparatus by following the dictionary updating program. The server 100 includes: the registered ontology DB 1; the glossaries 2; the thesaurus dictionary 3; the search key specifying unit 4; the glossary generating unit 7; the ontology updating unit 11; the search conducting unit 12; the word detecting/presenting unit 13; the search result displaying unit 14; the selected word re-searching unit 15; a selected-word-history storing unit 16; a word evaluating unit 17; an evaluation collecting unit 18; a glossary access history DB 19; a frequently-used word-set detecting unit 20; a list generating unit 21; an ontology improvement proposing unit 22; a corresponding word updating unit 23; and the registering unit 24. With this configuration, the server 100 makes improvement proposals for the existing ontologies, by using the glossary access history.

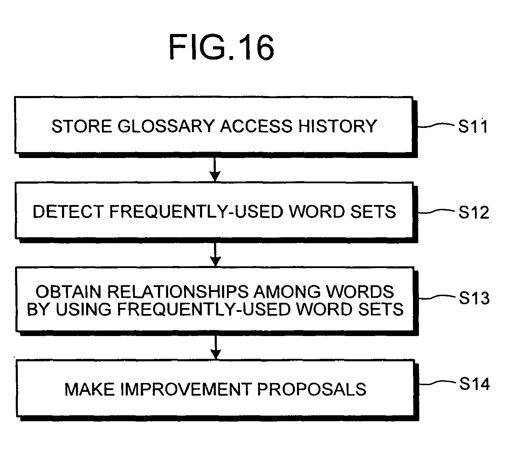

As shown in a flowchart in Fig. 16, the procedure for making the improvement proposals for the existing ontologies by using the glossary access history includes the following four steps:

Step S11: Store a glossary access history;
Step S12: Detect frequently-used word sets;
Step S13: Obtain relationships among the words by using the frequently-used word sets;
Step S14: Make improvement proposals.

Next, the details of each of the steps will be explained.

Step S11: Store a glossary access history

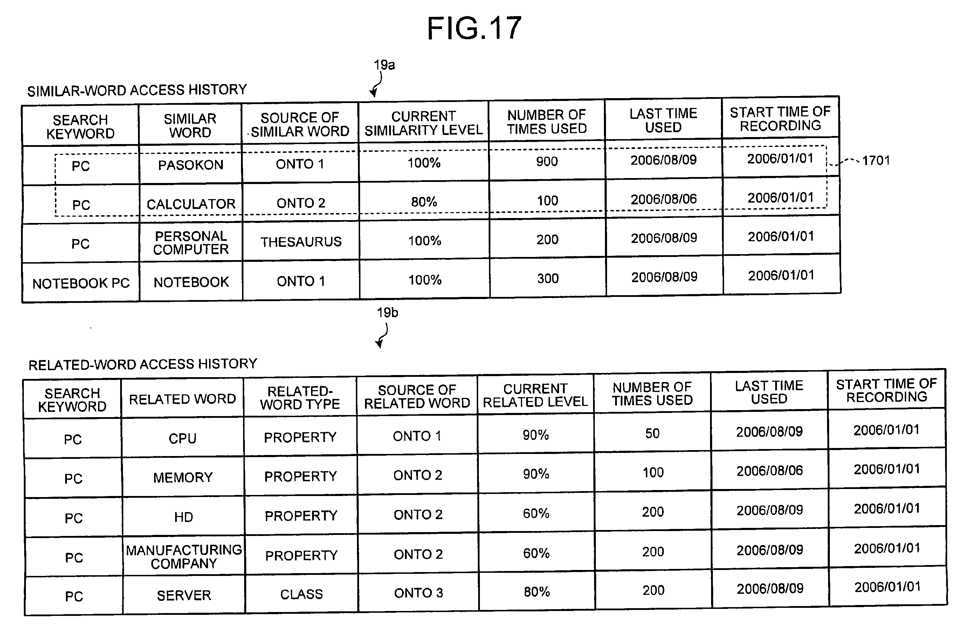

The selected word history storing unit 16 stores, into the glossary access history DB 19, a word selected by the user on the similar/related word displaying screen 50 shown in Fig. 15 as explained in the description of the first embodiment and the search keywords that have been input by the user on the search setting screen 30 shown in Fig. 10 as explained in the description of the first embodiment, while bringing the selected word and the input search keywords into correspondence with each other. Fig. 17 is a schematic drawing illustrating the glossary access history stored in the glossary access history DB 19. As shown in Fig. 17, the glossary access history stored in the glossary access history DB 19 can be divided into a similar-word access history 19a and a related-word access history 19b. In a case where, for example, a search is conducted again by selecting both "calculator" and "PASOKON (a Japanese word meaning personal computer)" out of the similar words 51 on the similar/related word displaying screen 50 shown in Fig. 16, a history of the selection 1701 is added to the glossary access history shown in Fig. 17. In a case where the search keywords and the selected words have already been stored in the glossary access history stored in the glossary access history DB 19, the value in the "number of times used" column is incremented by 1.

Step S12: Detect frequently-used word sets

At step S12, the frequently-used word-set detecting unit 20 detects frequently-used word sets for each of the search keywords, by using the glossary access history stored in the glossary access history DB 19.

First, the frequently-used word-set detecting unit 20 detects a frequently-used search keyword out of the similar-word access history 19a and the related-word access history 19b. For each search keyword "K", the frequently-used word-set detecting unit 20 calculates the number of times used indicating how many times the search keyword is stored into the similar-word access history 19a and the related-word access history 19b. A search keyword that has a large value as the number of times used is considered to be a frequently-used search keyword. In the example shown in Fig. 17, the number of times the search keyword "PC" is used is calculated as 1950, as a result of the calculation below:

$$\mathtt{tf(PC)=900+100+200+50+100+200+200+200}$$

$$\mathtt{=1950.}$$

In addition, the number of times the search keyword "notebook PC" is used is 300; therefore the following is obtained:

$$\mathtt{tf(NOTEBOOK\ PC)=300.}$$

The frequently-used word-set detecting unit 20 adds search keywords that have larger values as the number-of-times-used value or search keywords that have a number-of-times-used value larger than a predetermined threshold value to the frequently-used class keyword list L. After that, the frequently-used word-set detecting unit 20 detects a frequently-used word set for each of the search keywords included in the frequently-used class keyword list L.

First, the process of detecting frequently-used similar words will be explained by using the frequently-used search keyword "PC" as an example. It is possible to find out the number of times similar words corresponding to the search keyword "PC" have been used, by referring to the similar-word access history 19a stored in the glossary access history DB 19. Thus, one or more of the words out of the similar-word access history 19a that have a number of used times larger than a predetermined threshold value are added to the "frequently-used similar word set". In the example shown in Fig. 17, with regard to the search keyword "PC", a value of frequency with which the similar word "PASOKON" is selected is expressed as tf_PC(PASOKON)=900; a value of frequency with which the similar word "calculator" is selected is expressed as tf_PC(CALCULATOR)=100; and a value of frequency with which the similar word "personal computer" is selected is expressed as tf_PC(personal computer)=200. In a case where the threshold value is set to 150, the "frequently-used similar word set" for the search keyword "PC" expressed as SimilarL(PC) is represented by {PASOKON, personal computer}. The frequently-used word-set detecting unit 20 is able to set the threshold value.

Next, the process of detecting frequently-used related words will be explained. Like in the method for detecting the frequently-used similar words, it is possible to find out the number of times related words corresponding to the search keyword "PC" have been used, by referring to the related-word access history 19b stored in the glossary access history DB 19. Thus, one or more of the words out of the related-word access history 19b that have a number of used times larger than a predetermined threshold value are added to the "frequently-used related word set". In the example shown in Fig. 17, the following is obtained: tf_PC(CPU)=50; tf_PC (MEMORY) =100; tf_PC (HD) =200; tf_PC (MANUFACTURING COMPANY)=200; and tf_PC(SERVER)=200. In a case where the threshold value is set to 100, the "frequently-used related word set" for the search keyword "PC" expressed as RelatedL(PC) is represented by {MEMORY, HD, MANUFACTURING COMPANY, SERVER}. The frequently-used word-set detecting unit 20 is able to set the threshold value.

The "frequently-used similar word set" expressed as SimilarL and the "frequently-used related word set" expressed as RelatedL that have been detected by the frequently-used word-set detecting unit 20 as explained above will be referred to as the "frequently-used word sets".

In the example explained above, the frequently-used word-set detecting unit 20 has detected the frequently-used word sets for the one search keyword "PC".

As a result of the process described above, the frequently-used word-set detecting unit 20 is able to detect frequently used word sets for each of the frequently-used search keywords that are stored in the glossary access history DB 19 (or for all of the search keywords).

Step S13: Obtain relationships among the words by using the frequently-used word sets

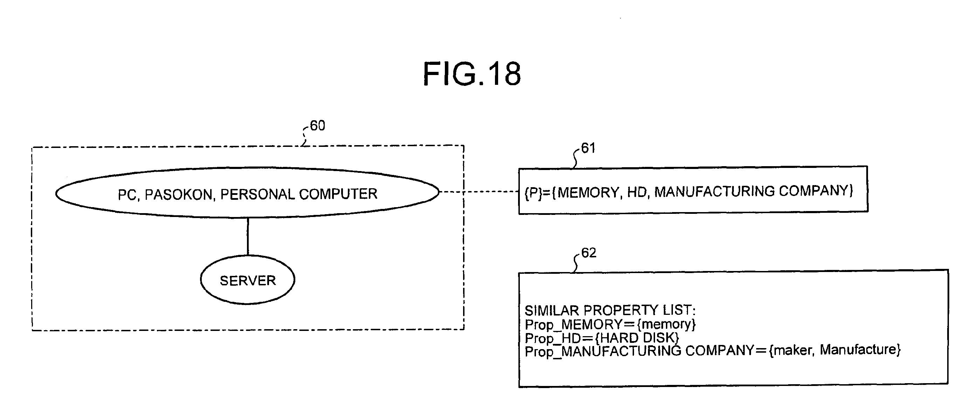

At step S13, the list generating unit 21 obtains relationships among the search keywords and the words included in the frequently-used word sets by using the detected frequently-used word sets for each of the keywords. Fig. 18 is a schematic drawing illustrating the relationships among the frequently-used word sets. As shown in Fig. 18, there are a property set 61 and a similar property list 62 in correspondence with class words 60 included in a frequently-used word set. More specifically, the property set 61 and the similar property list 62 are in correspondence with the search keyword "PC".

As explained above, all of the words included in the frequently-used similar word set are each a similar word of the search keyword. For example, the frequently-used similar word set for the search keyword "PC" expressed as SimilarL(PC)={PASOKON, personal computer} are similar words for each other, as indicated with the reference character 60 in Fig. 18.

On the other hand, the frequently-used related word set includes two types of words, namely, class words and property words. Each of the related class words is in either a parent-child relationship or a sibling relationship with the search keyword. Each of the related property words serves as a property of the class that uses the search keyword and the similar words thereof. In the example shown in Fig. 18, "SERVER" included in the frequently-used related word set expressed as RelatedL={MEMORY, HD, MANUFACTURING COMPANY, SERVER} is a class word. Thus, as indicated with the reference character 60 in Fig. 18, the search keyword "PC" is in either a parent-child relationship or a sibling relationship with each of the similar word classes. The other related words, namely "MEMORY", "HD", and "MANUFACTURING COMPANY", are properties. Thus, as indicated with the reference character 61 in Fig. 18, these words form a property set of the class "PC" or the class "PASOKON" or the class "personal computer".

Further, for each of the properties included in the property set, the list generating unit 21 generates a similar word list of the property words, based on the similar-word DB 2a shown in Fig. 6. More specifically, for the property set indicated with the reference character 61 in Fig. 18, the list generating unit 21 generates a similar-property list (i.e., a similar word list) as shown in Fig. 18, based on the similar-word DB 2a.

By using the method described above, it is possible to generate a relation diagram among the search keywords and the words included in the frequently-used word sets thereof.

Step S14: Make improvement proposals

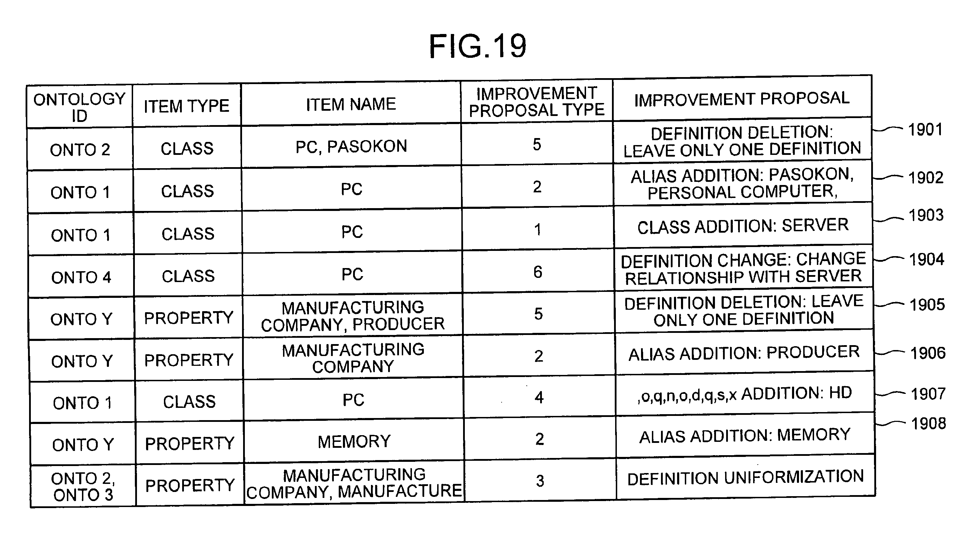

At step S14, by using the frequently-used word sets for each of the keywords, the ontology improvement proposing unit 22 makes improvement proposals for the existing ontologies. Like in the description of the first embodiment, according to the second embodiment the improvement proposals can be classified into the following six types as shown in Fig. 19:

[Type 1] class addition: to add a class;
[Type 2] alias addition: to add an alias to a class or to a property;
[Type 3] definition uniformization: to have an arrangement so that similar classes (or similar properties) in mutually different ontologies have the same definition in common;
[Type 4] property addition: to add a property;
[Type 5] definition deletion: to delete an unnecessary class or an unnecessary property if the definitions of a class or a property are duplicate;
[Type 6] definition change: to change the relationships between classes.

Next, a method for making the improvement proposals for the existing ontologies will be explained.
First, the method will be explained by using the class relationships shown in Fig. 18.

(1) In a case where two or more classes are defined in an ontology, there is a possibility that the class definitions are duplicate. Thus, the ontology improvement proposing unit 22 automatically makes an improvement proposal that only one class definition should remain. In addition, the ontology improvement proposing unit 22 makes another improvement proposal that the deleted class words should be added to the remaining class as its aliases. With the example of the class relationships shown in Fig. 18, two or more classes, namely the classes "PC", "PASOKON" "personal computers", are defined in one ontology. Thus, the ontology improvement proposing unit 22 makes an improvement proposal 1901 as shown in Fig. 19 that only one class definition should remain. Further, the ontology improvement proposing unit 22 makes an improvement proposal 1902 as shown in Fig. 19 that the other two classes should be added to the remaining class as its aliases.

(2) In a case where similar class items are defined in an ontology, the ontology improvement proposing unit 22 makes an improvement proposal that other similar words should be added to the class as its alias. By adding aliases to each other between classes in an ontology in this manner, it is possible to improve the exchangeability between the ontologies. Further, by adding words from the thesaurus dictionary 3, it is possible to make the definitions in the ontologies more accurate. With the example of the relationships shown in Fig. 18, in a case where the class "PC" is defined in the ontology, the classes "PASOKON" and "personal computer" that are similar to the class "PC" are defined. Thus, the ontology improvement proposing unit 22 makes an improvement proposal 1902 as shown in Fig. 19 that the classes "PASOKON" and "personal computer" should be additionally defined as aliases of the class "PC". In this situation, because "personal computer" is a word from the thesaurus dictionary 3, it is possible to make the definitions more accurate by adding the word to the definitions in the ontology.

(3) In a case where at least one class is defined in an ontology, the ontology improvement proposing unit 22 makes a comparison to check to see if a parent-child class or a sibling class of the defined class has the same structure as the relationship in the frequently-used word set. With the example of the class relationships shown in Fig. 18, because the class "PC" is defined in the ontology, the ontology improvement proposing unit 22 checks to see if the class "server" is defined as a parent-child class or a sibling class of the class "PC". In a case where the class "SERVER" is not defined, the ontology improvement proposing unit 22 makes an improvement proposal 1903 as shown in Fig. 19 that the class "SERVER" should be added. On the other hand, in a case where the class "SERVER" is defined but is not in a parent-child relationship or a sibling relationship with the class "PC", the ontology improvement proposing unit 22 makes an improvement proposal 1904 as shown in Fig. 19 that the relationship between the class "SERVER" and the class "PC" should be corrected in the existing ontologies.

The following explanation is based on the relationships among the classes and the properties shown in Fig. 18.
In a case where the class "PC" or the class "PASOKON" or the class "personal computer" is defined in an existing ontology (referred to as "Onto Y"), the ontology improvement proposing unit 22 checks to see if, with regard to each of these classes, a property set {P} that is the same as the property set 61 shown in Fig. 18 is defined.

(1) In a case where the property P1 is not defined in the ontology Onto Y, the ontology improvement proposing unit 22 checks to see if the words in a similar property list of the property P1 expressed as Prop_P1 are defined in the ontology Onto Y in which the property P1 is defined.

(i) In a case where two or more properties in the similar property list of the property P1 expressed as Prop_P1 are defined in the ontology Onto Y, the ontology improvement proposing unit 22 makes an improvement proposal 1905 as shown in Fig. 19 that the properties except for one property should be deleted. Further, the ontology improvement proposing unit 22 makes an improvement proposal 1906 as shown in Fig. 19 that the deleted properties should be added to the remaining property as its aliases.
(ii) In a case where none of the words in the similar property list of the property P1 expressed as Prop_P1 is defined in the ontology Onto Y, the ontology improvement proposing unit 22 makes an improvement proposal 1907 as shown in Fig. 19 that the property P1 should be added to the ontology Onto Y.
(iii) In a case where Px that is included in the similar property list of the property P1 expressed as Prop_P1 is defined in the ontology Onto Y, the ontology improvement proposing unit 22 makes an improvement proposal 1908 as shown in Fig. 19 that the property P1 should be added to the property Px as its alias.

(2) In a case where all of the properties included in the property set {P} are defined in the ontology Onto Y, the ontology improvement proposing unit 22 checks to see if all of the words in the similar property list of the property P1 expressed as Prop_P1 are defined in the ontology Onto Y in which the property P1 is defined.

(i) In a case where one or more words in the similar property list of the property P1 expressed as Prop_P1 are defined in the ontology Onto Y, the ontology improvement proposing unit 22 makes an improvement proposal 1905 as shown in Fig. 19 that the properties should be deleted. Further, the ontology improvement proposing unit 22 makes an improvement proposal 1906 of an alias addition as shown in Fig. 19 that the deleted words should be registered as aliases of the property P1.
(ii) In a case where none of the words in the similar property list of the property P1 expressed as Prop_P1 is defined in the ontology Onto Y, the ontology improvement proposing unit 22 makes an improvement proposal 1906 of an alias addition as shown in Fig. 19 that the words in the similar property list Prop_P1 should be added to the property P1 as its aliases in a descending order of their similarity levels.

Thus completes the explanation of the ontology improvement proposing unit 22. The improvement proposals made by the ontology improvement proposing unit 22 are forwarded to the ontology updating unit 11.
The ontology updating unit 11 automatically or semiautomatically updates corresponding portions of corresponding ontologies, according to the improvement proposals made by the ontology improvement proposing unit 22.
Accordingly, when the existing ontologies are updated according to the improvement proposals made by the ontology improvement proposing unit 22, the updated ontologies are registered into the registered ontology DB 1 via the registering unit 24. Thus, the glossaries 2 are also updated according to the improvement proposals made by the ontology improvement proposing unit 22.
In addition, according to the second embodiment, as shown in Fig. 15, the server 100 includes the word evaluating unit 17. The word evaluating unit 17 is operable to evaluate the similarity level or the related level by using the results of the searches conducted again by the selected word re-searching unit 15. The evaluation collecting unit 18 collects the evaluation results obtained by the word evaluating unit 17 and stores the collected evaluation results into the glossary access history DB 19.

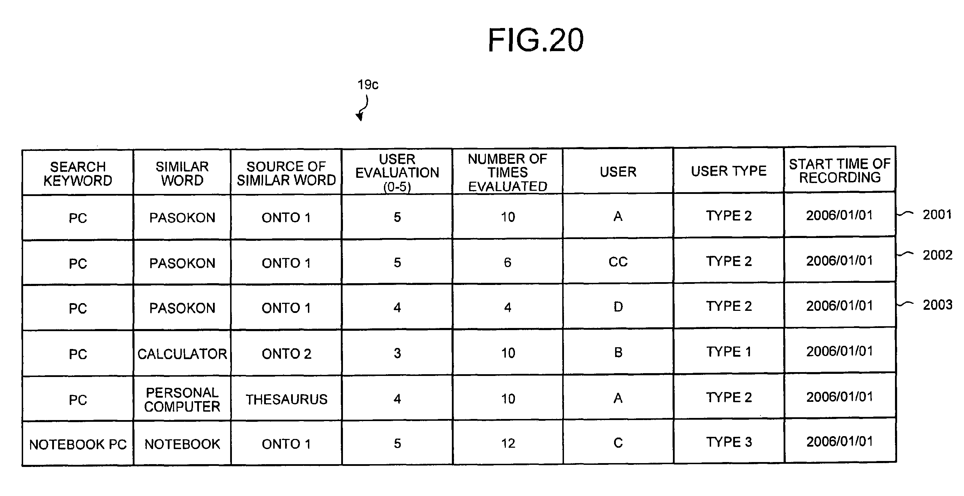

Fig. 20 is a schematic drawing illustrating an example of an evaluation result 19c. In Fig. 20, the example of an evaluation performed on similar words is shown; however, needless to say, the user is able to perform an evaluation on related words in a similar fashion. The similarity level and the related_level are each set to one of six levels from 0 to 5. The level "5" means that a word selected on the similar/related word displaying screen 50 as shown in Fig. 15 is the most similar or the most related to the search keywords that have been input on the search setting screen 30 as shown in Fig. 10. Conversely, the level "0" means that the selected word is the least similar or the least related to the search keywords.

After that, the ontology improvement proposing unit 22 is operable to submit another improvement proposal for the ontologies, after adding such evaluation results obtained by the word evaluating unit 17 that have the same search keyword and the same words, to an improvement proposal for the ontologies that has previously been made by the ontology improvement proposing unit 22. In this situation, one method is to add the evaluation results of all the users to the improvement proposal for each set made up of a search keyword and a word. Another method is to add an average value of the evaluations results of all the users to the improvement proposal.

Further, according to the second embodiment, as shown in Fig. 15, the server 100 includes the corresponding word updating unit 23. The corresponding word updating unit 23 re-calculates the similarity level and the related level between the word selected on the similar/related word displaying screen 50 and the search keywords that have been input on the search setting screen 30, by using the evaluation results that have been obtained by the word evaluating unit 17 and stored in the glossary access history DB 19 and updates a corresponding one of the glossaries 2. In the following section, the re-calculation process performed by the corresponding word updating unit 23 will be explained in detail. In the following explanation, the re-calculation process will be explained by using the similarity level as an example. However, the related level is also recalculated in the same manner so that the glossaries 2 are updated.

The similarity level is an average value of evaluation results of all the users. The method for calculating the evaluation result average value can be expressed by using a formula shown below:

```
Average_Similarity=(Σ(user evaluation value*the number
of times evaluated)/Σthe number of times evaluated)/5
```

With the evaluation example shown in Fig. 20, the user evaluation results for the similarity level between the search keyword "PC" and the word "PASOKON" are indicated with the reference characters 2001 to 2003. Accordingly, the similarity level S between "PC" and "PASOKON" is calculated as below:

S=((5*10+5*6+4*4)/20)/5
=4.8/5
=96%.

Thus, the corresponding word updating unit 23 updates the similarity level between "PC" and "PASOKON" in the similar-word glossary stored in the similar-word DB 2a shown in Fig. 6 to 96%.

As explained above, according to the second embodiment, it is possible to provide a support so that the quality of the ontologies can be improved by making the improvement proposals regarding the elements (e.g., one or more of items are missing; one or more of the items are abnormal; the items have ununiformity; the items have irregularity) that may degrade the quality of the classes or the properties that are the items constituting the existing ontologies, based on the analysis performed on the history of state of the searches conducted by the users, in other words, based on the history of the accesses to the similar/related words.

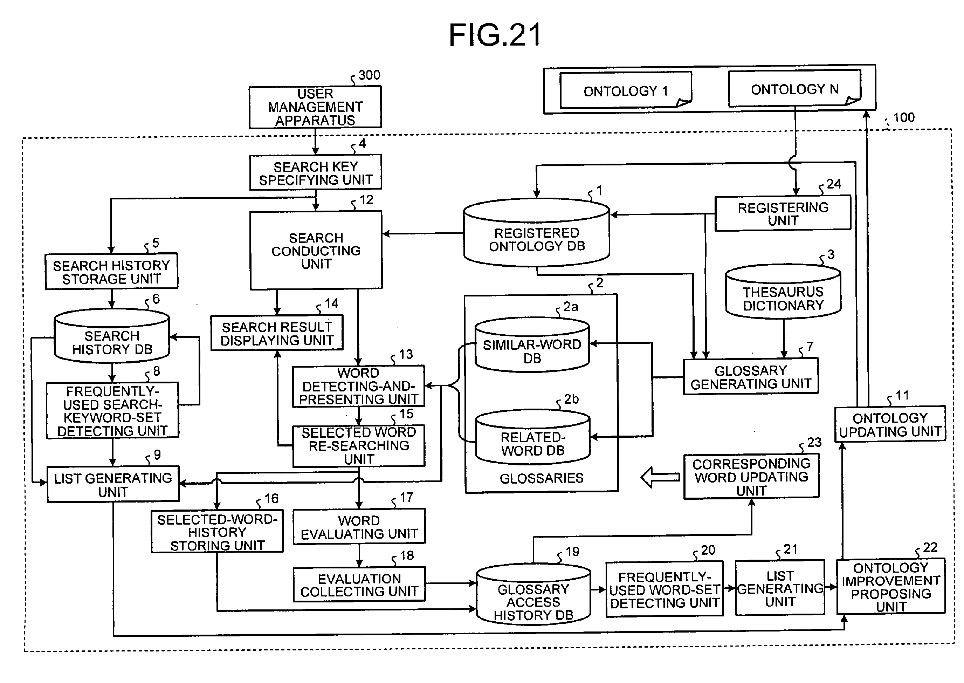

Next, a third embodiment of the present invention will be explained with reference to Figs. 21 to 24. The functional units that are the same as those in the first embodiment or the second embodiment will be referred to by using the same reference characters, and the explanation thereof will be omitted.

The third embodiment is related to a method for making improvement proposals for the existing ontologies by using both the search keyword history used according to the first embodiment to make the improvement proposals for the ontologies and the glossary access history used according to the second embodiment to make the improvement proposals for the ontologies.

As shown in Fig. 21, the server 100 functions as a dictionary updating apparatus by following the dictionary updating program. The server 100 includes: the registered ontology DB 1; the glossaries 2; the thesaurus dictionary 3; the search key specifying unit 4; the search history storage unit 5; the search history DB 6; the glossary generating unit 7; the frequently-used search-keyword-set detecting unit 8; the list generating unit 9; the ontology updating unit 11; the search conducting unit 12; the word detecting/presenting unit 13; the search result displaying unit 14; the selected word re-searching unit 15; the selected word history storing unit 16; the word evaluating unit 17; the evaluation collecting unit 18; the glossary access history DB 19; the frequently-used word-set detecting unit 20; the list generating unit 21; the ontology improvement proposing unit 22; the corresponding word updating unit 23; and the registering unit 24. With this configuration, the server 100 makes improvement proposals for the existing ontologies, by using the search keyword history and the glossary access history.

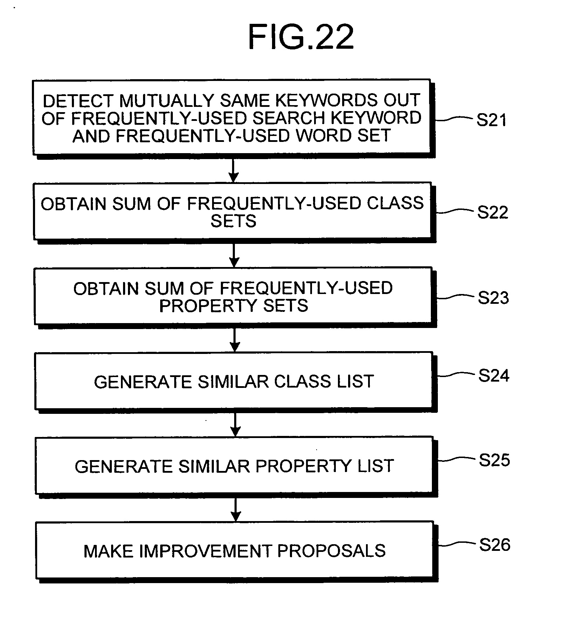

As shown in the flowchart in Fig. 22, the procedure for making the improvement proposals for the existing ontologies by using the search keyword history and the glossary access history includes the following six steps:

Step S21: Detect keywords that are mutually the same out of the frequently-used search-keyword-set and the frequently-used word set;
Step S22: Obtain a sum of a frequently-used class set between the frequently-used search-keyword-set and the frequently-used word set;
Step S23: Obtain a sum of a frequently-used property set between the frequently-used search-keyword-set and the frequently-used word set;
Step S24: Generate a similar class list;
Step S25: Generate a similar property list;
Step S26: Make improvement proposals.

Next, the details of each of the steps will be explained.

Step S21: Detect keywords that are mutually the same out of the frequently-used search-keyword-set and the frequently-used word set

At step S21, the ontology improvement proposing unit 22 obtains the frequently-used search-keyword-set explained in the description of the first embodiment (see Fig. 12) and the frequently-used word set explained in the description of the second embodiment (see Fig. 18) and detects keywords that are mutually the same out of the frequently-used search-keyword-set and the frequently-used word set that have been obtained. The frequently-used word set includes a class set and a property set. When the frequently-used search-keyword-set shown in Fig. 12 is expressed as Search_L, the class set Search_class_L can be expressed as Search_class_L={PC, CALCULATOR, SERVER, NOTEBOOK PC} whereas the property set Search_property_L can be expressed as Search_property_L={MANUFACTURING COMPANY, MEMORY, HD, VOLTAGE, PRODUCTION DATE, MANUFACTURE, PRODUCER, PRICE}. Also, when the frequently-used word set corresponding to the search keyword "PC" shown in Fig. 18 is expressed as Item_L, the class set Item_class_L can be expressed as Item_class_L={PC, PASOKON, personal computer} whereas the property set item_property_L can be expressed as Item_property_L={memory, HD, manufacturing company}.

Step S22: Obtain a sum of a frequently-used class set between the frequently-used search-keyword-set and the frequently-used word set

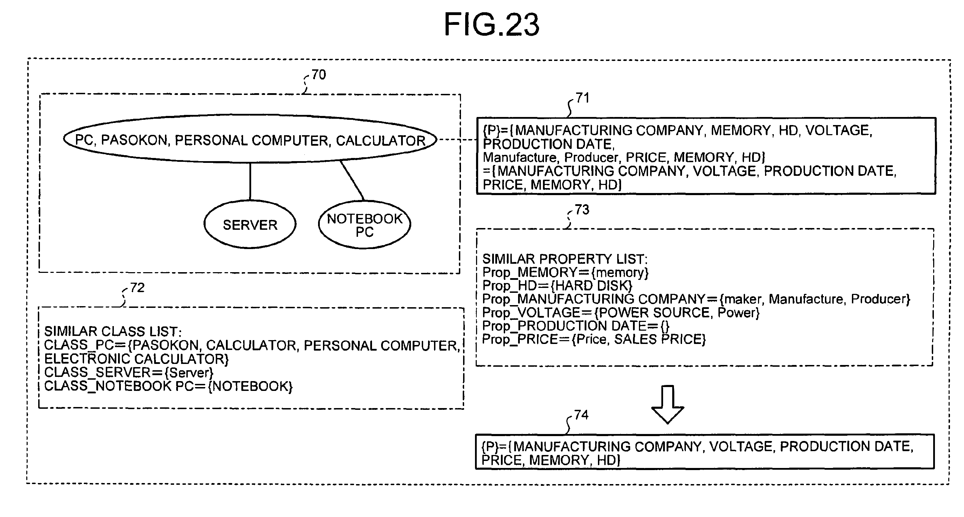

At step S22, the ontology improvement proposing unit 22 obtains a sum of a frequently-used class set between the frequently-used search-keyword-set and the frequently-used word set. Fig. 23 is a schematic drawing illustrating an example of the sum between the frequently-used search-keyword-set and the frequently-used word set. When the sum of the frequently-used class set is obtained between the frequently-used search-keyword-set explained in the description of the first embodiment (see Fig. 12) and the frequently-used word set explained in the description of the second embodiment (see Fig. 18), a relationship as shown in Fig. 23 is obtained. In the example shown in Fig. 23, when a sum between Search_class_L and Item_class_L is obtained, a frequently-used class set (Class_L) 70 can be expressed as below:

The frequently-used class set Class_L =Search_class_L∪Item_class_L ={PC, CALCULATOR, SERVER, NOTEBOOK PC, PASOKON, PERSONAL COMPUTER}.

Step S23: Obtain a sum of a frequently-used property set between the frequently-used search-keyword-set and the frequently-used word set

At step S23, the ontology improvement proposing unit 22 obtains a sum of a frequently-used property set between the frequently-used search-keyword-set and the frequently used word set. When the sum of the frequently-used property set is obtained between the frequently-used search-keyword-set explained in the description of the first embodiment (see Fig. 12) and the frequently-used word set explained in the description of the second embodiment (see Fig. 18), a relationship as shown in Fig. 23 is obtained. In the example shown in Fig. 23, when a sum between Search_property_L and Item_property_L is obtained, a frequently-used property set (Property_L) 71 can be expressed as below:

The frequently-used property set Property_L =Search_property_L∪Item_property_L ={MANUFACTURING COMPANY, MEMORY, HD, VOLTAGE, PRODUCTION DATE, MANUFACTURE, PRODUCER, PRICE, MEMORY, HD} ={MANUFACTURING COMPANY, VOLTAGE, PRODUCTION DATE, PRICE MEMORY, HD}.

Step S24: Generate a similar class list

At step S24, the ontology improvement proposing unit 22 generates a similar class list for each of all the words included in the frequently-used class set Class_L, by referring to the existing glossaries 2 (i.e., the similar-word glossary stored in the similar-word DB 2a). The reference character 72 in Fig. 23 indicates an example of a similar class list for the frequently-used class set Class_L. This example will be explained in details below.

First, the ontology improvement proposing unit 22 checks to see if the words included in the frequently-used class set expressed as Class_L are similar words. According to the third embodiment, by referring to the existing glossaries 2 shown in Fig. 6 (i.e., the similar-word glossary stored in the similar-word DB 2a), it is understood that the words "PC", "PASOKON", "PERSONAL COMPUTER", and "CALCULATOR" are similar words. Thus, a similar class list Class_PC={PASOKON, CALCULATOR, PERSONAL COMPUTER} is generated.

Further, by referring to the existing glossaries 2 (i.e., the similar-word glossary stored in the similar-word DB 2a), the ontology improvement proposing unit 22 detects similar words for each of all the words included in the similar class list and adds the detected similar words to the similar class list while making sure that there is no duplicate word. By referring to the existing glossaries 2 shown in Fig. 6 (i.e., the similar-word glossary stored in the similar-word DB 2a), the ontology improvement proposing unit 22 adds the word "ELECTRONIC CALCULATOR" that is a similar word to "PC" to the similar class list Class_PC. As a result, the following is obtained:

Class_PC={PASOKON, CALCULATOR, PERSONAL COMPUTER, ELECTRONIC CALCULATOR}.

Similarly, the ontology improvement proposing unit 22 detects one or more similar words for each of the other words that are included in the frequently-used class set Class_L, namely "SERVER" and "NOTEBOOK PC". As a result, the ontology improvement proposing unit 22 obtains similar word lists such as Class_server={SERVER} and Class_notebook PC={NOTEBOOK}.

Step S25: Generate a similar property list

At step S25, the ontology improvement proposing unit 22 generates a similar property list for each of all the words included in the frequently-used property set Property_L, by referring to the existing glossaries 2 (i.e., the similar-word glossary stored in the similar-word DB 2a). The reference character 73 in Fig. 23 indicates an example of a similar property list for the frequently-used property set Property_L. This example will be explained in details below.

First, the ontology improvement proposing unit 22 checks to see if the words included in the frequently-used property set expressed as Property_L are mutually similar words. According to the third embodiment, by referring to the existing glossaries 2 shown in Fig. 6 (i.e., the similar-word glossary stored in the similar-word DB 2a), it is understood that the properties "manufacturing company", "MANUFACTURE", and "PRODUCER" are similar words. Thus, a similar property list Prop_manufacturing company={MANUFACTURE, PRODUCER} is generated. This similar property list expresses that "MANUFACTURING COMPANY", "MANUFACTURE", and "PRODUCER" are similar words. In the present example, Prop_manufacturing company is used as an example; however, Prop_manufacture and Prop_producer each have the same meaning, too. As explained here, by using one of the similar words, it is possible to express the similar property list.

Further, by referring to the existing glossaries 2 (i.e., the similar-word glossary stored in the similar-word DB 2a), it is understood that the properties that are similar to "MANUFACTURING COMPANY" also include the word "MAKER". Thus, the ontology improvement proposing unit 22 adds the word "MAKER" to the similar word property list of "MANUFACTURING COMPANY". As a result, the similar property list Prop_manufacturing company is expressed as below: Prop_manufacturing company={MANUFACTURE, PRODUCER, MAKER}.

Similarly, the ontology improvement proposing unit 22 obtains a similar property list for each of the other words that are included in the frequently-used property set Property_L.

Lastly, the ontology improvement proposing unit 22 generates an actual similar property list 74 as shown in Fig. 23, by eliminating similar items from the frequently-used property set (Property_L) L.

Step S26: Make improvement proposals

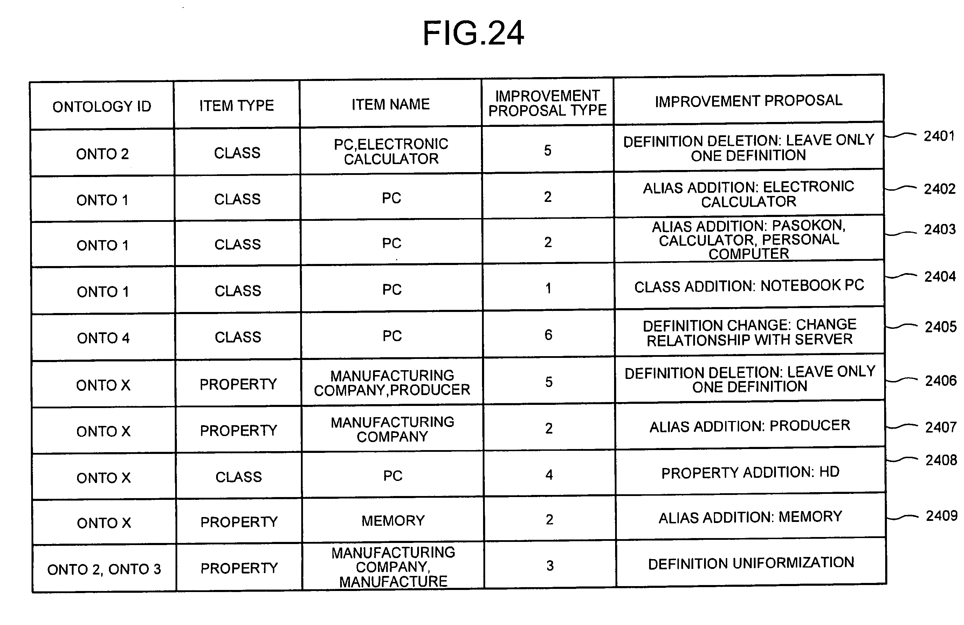

At step S26, the ontology improvement proposing unit 22 makes improvement proposals for the existing ontologies, by using the property sets and the corresponding similar class lists and the corresponding similar property lists. Like in the description of the first embodiment and the second embodiment, according to the third embodiment the improvement proposals can be classified into the following six types as shown in Fig. 24:

[Type 1] class addition: to add a class;
[Type 2] alias addition: to add an alias to a class or to a property;
[Type 3] definition uniformization: to have an arrangement so that similar classes (or similar properties) in mutually different ontologies have the same definition in common;
[Type 4] property addition: to add a property;
[Type 5] definition deletion: to delete an unnecessary class or an unnecessary property if the definitions of a class or a property are duplicate;
[Type 6] definition change: to change the relationships between classes.

Next, a method for making the improvement proposals for the existing ontologies will be explained.

First, the method will be explained by using the frequently-used class set and the similar class list.

(1) Because all of the words included in one similar class list are similar words, the ontology improvement proposing unit 22 automatically makes an improvement proposal that only one item is defined in each ontology. To explain this procedure by using the similar class list Class_PC, with respect to the class "PC" and all of the class words included in its similar class list: {PASOKON, CALCULATOR, PERSONAL COMPUTER, ELECTRONIC CALCULATOR}, it is possible to define only one of the classes in the list in each ontology. Thus, in a case where two or more classes are defined, the ontology improvement proposing unit 22 makes an improvement proposal 2401 as shown in Fig. 24 that only one class definition should remain. Further, the ontology improvement proposing unit 22 makes an improvement proposal 2402 as shown in Fig. 24 that the deleted classes should be added to the remaining class as its aliases.

(2) In a case where one of the classes in the similar class list is defined, the ontology improvement proposing unit 22 makes an improvement proposal that the other words should be added as aliases. For example, the ontology improvement proposing unit 22 makes an improvement proposal 2403 as shown in Fig. 24 that the similar words {PASOKON, CALCULATOR, PERSONAL COMPUTER} that have not yet been defined should be added to the class "PC" as the aliases of "PC".

(3) In a case where at least one class is defined in an ontology, the ontology improvement proposing unit 22 makes a comparison to check to see if a parent-child class or a sibling class of the defined class has any class that is the same as the classes in the frequently-used class set. In a case where there is any class that is defined in the frequently-used class set but is not defined in the ontology, the ontology improvement proposing unit 22 makes an improvement proposal that the class should be added. For example, the class "SERVER" and the class "NOTEBOOK PC" should be defined as a parent-child class or a sibling class of the class "PC". Thus, in a case where the class "SERVER" and the class "NOTEBOOK PC" are not defined in correspondence with the class "PC" in one or more of the existing ontologies, the ontology improvement proposing unit 22 makes an improvement proposal 2404 as shown in Fig. 24 that these classes should be added. On the other hand, in a case where the class relationships defined in any of the existing ontologies is different from the class relationships in the frequently-used class set, the ontology improvement proposing unit 22 makes an improvement proposal 2405 as shown in Fig. 24 that the relationships among the classes in the ontology should be corrected.

The following explanation is based on relationships among classes and properties.

If a class that is the same as one in the frequently-used class set is defined in any of the existing ontologies, items in the frequently-used property set or similar items of the properties should be defined in correspondence with the defined class. More specifically, in the example shown in Fig. 23, a frequently-used property set 74 expressed as {P} or a similar list 73 of its items should be defined in correspondence with the class "PC" (and its similar classes) in the existing ontologies. Thus, the ontology improvement proposing unit 22 compares the properties used by "PC" in an existing ontology (referred to as "Onto X") with the frequently-used property set {P}.

(1) In a case where a property P2 defined in the frequently-used property set {P} is not defined in the existing ontology Onto X, the ontology improvement proposing unit 22 checks to see if the words in a similar properly list of the property P2 expressed as Prop_P2 are defined in the ontology Onto X in which the property P2 is defined.

(i) In a case where two or more properties included in the similar property list of the property P2 expressed as Prop_P2 are defined in the ontology Onto X, the ontology improvement proposing unit 22 makes an improvement proposal 2406 as shown in Fig. 24 that the properties except for one property should be deleted. Further, the ontology improvement proposing unit 22 makes an improvement proposal 2407 as shown in Fig. 24 that the deleted properties should be added to the remaining property as its aliases.

(ii) In a case where none of the words included in the similar property list of the property P2 expressed as Prop_P2 is defined in the ontology Onto X, the ontology improvement proposing unit 22 makes an improvement proposal 2408 as shown in Fig. 24 that the property P2 should be added to the ontology Onto X.

(iii) In a case where a Px included in the similar property list of the property P2 expressed as Prop_P2 is defined in the ontology Onto X, the ontology improvement proposing unit 22 makes an improvement proposal 2407 as shown in Fig. 24 that the property P2 should be added to the property Px as its alias.

(2) In a case where all of the properties included in the property set {P} are defined in the ontology Onto X, the ontology improvement proposing unit 22 checks to see if all of the words included in the similar property list of the property P2 expressed as Prop_P2 are defined in the ontology Onto X in which the property P2 is defined.

(i) In a case where one or more words included in the similar property list of the property P2 expressed as Prop_ P2 are defined in the ontology Onto X, the ontology improvement proposing unit 22 makes an improvement proposal 2406 as shown in Fig. 24 that the properties should be deleted. Further, the ontology improvement proposing unit 22 makes an improvement proposal 2407 of an alias addition as shown in Fig. 24 that the deleted words should be registered as aliases of the property P2.

(ii) In a case where none of the words in the words in the similar property list of the property P2 expressed as Prop_P2 is defined in the ontology Onto X, the ontology improvement proposing unit 22 makes an improvement proposal 2409 of an alias addition as shown in Fig. 24 that the words in the similar property list Prop_P2 should be added to the property P2 as its aliases in a descending order of their similarity levels.

Thus completes the explanation of the ontology improvement proposing unit 22. The improvement proposals made by the ontology improvement proposing unit 22 are forwarded to the ontology updating unit 11.

The ontology updating unit 11 automatically or semiautomatically updates corresponding portions of corresponding ontologies, according to the improvement proposals made by the ontology improvement proposing unit 22.

As explained above, according to the third embodiment, both the information used in the first embodiment and the information used in the second embodiment are utilized. Thus, it is possible to make the scope of the improvement proposals wider than in the first embodiment and the second embodiment.

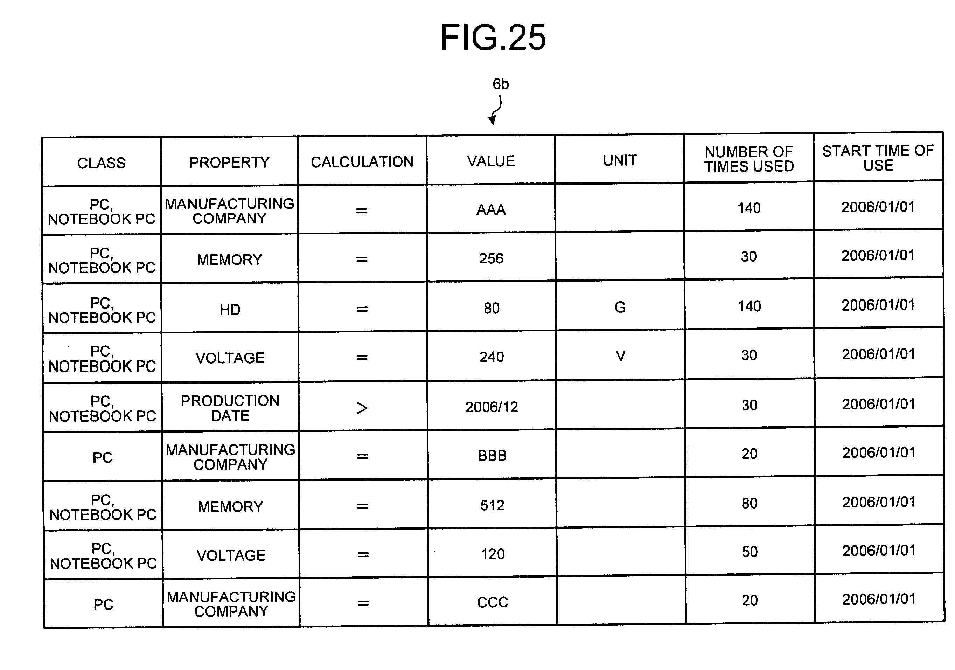

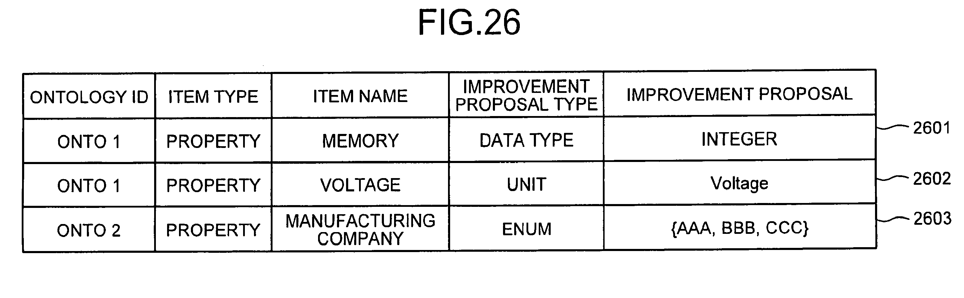

Next, a fourth embodiment of the present invention will be explained with reference to Figs. 25 and 26. The functional units that are the same as those in any of the first through the third embodiments will be referred to by using the same reference characters, and the explanation thereof will be omitted.

The search criteria that can be specified into the search key specifying unit 4 via the search setting screen 30 as shown in Fig. 10 are not limited to the classes and the properties described above. For example, as shown in Fig. 10, it is possible to specify values and units as search criteria into the search key specifying unit 4. The search keywords that have been specified into the search key specifying unit 4 via the search criteria (e.g., a class, a property, a value of a property, information of the unit) on the search setting screen 30 are stored into the search history DB 6. Fig. 25 is a schematic drawing illustrating a search keyword history 6b stored in the search history DB 6. As shown in Fig. 25, the class keywords that have been specified are stored in the "class" column. As for the property search criteria that are specified at the same time as the class criteria are specified, the properties are stored into the "property" column, whereas the values are stored into the "value" column. If the unit is specified for any of the properties, the unit is stored into the "unit" column. The relationships between the properties and the values are stored into the "calculation symbol" column. The words "value", "unit", and "calculation symbol" are words that are associated with the properties.

The frequently-used search-keyword-set detecting unit 8 detects a frequently-used search-keyword-set, based on the search keyword history stored in the search history DB 6. The list generating unit 9 generates a word list that is associated with all of the properties included in the frequently-used search-keyword-set.

The ontology improvement proposing unit 10 makes improvement proposals for the existing ontologies by using the frequently-used word set for each of the keywords. According to the fourth embodiment, the improvement proposals can be classified into the following three types as shown in Fig. 26:

[Type 1] Data Type;
[Type 2] Unit;
[Type 3] ENUM.

Next, a method for making the improvement proposals for the existing ontologies will be explained.

(1) Data Type

As shown in Fig. 25, frequently-used properties for a frequently-used class "PC" include a property "memory". By referring to the search keyword history, it is understood that a value that is frequently used with the property "memory" is 256 or 512. The frequency with which each of these values is used can be expressed as $tf\_memory(256)=30$ and $tf\_memory(512)=80$. The ontology improvement proposing unit 10 automatically judges that the values used by the property are integers and makes an improvement proposal 2601 for the ontology as shown in Fig. 26 that the data type of the property 'memory" should be integers.

(2) Unit

As shown in Fig. 25, frequently-used properties for the frequently-used class "PC" include a property "voltage". It is possible to detect a unit that is frequently specified with the property "voltage". In the example shown in Fig. 25, the number of times the unit "volts [V]" is used with the property "voltage" is "30". No other unit is used with the property "voltage". In other words, the unit volts [V] is a unit that is frequently used with the property "voltage". Thus, the ontology improvement proposing unit 10 makes an improvement proposal 2602 for the ontology as shown in Fig. 26 that in a case where the attribute "unit" is used for the property "voltage" in corresponding ones of the classes ("PC" or "notebook PC" in the example shown in Fig. 25) in the ontology, the unit should be defined as "volts [V]".

(3) ENUM

In some situations, frequently-used properties of a frequently-used class form a set in an original ontology. These set-type properties have a data type for which the values of the properties are selected out of a set of determined values. For example, in correspondence with a property "color", a value is selected out of a set including colors such as {red, black, white, blue, . . . }. According to the fourth embodiment, when the properties form a set, it is possible to detect frequently-used values of the properties by referring to the search keyword history (i.e., a history of search values) 6b stored in the search history DB 6. In the example shown in Fig. 25, it is understood that the frequently-used values for the property "manufacturing company" are "AAA", "BBB", and "CCC". Accordingly, in the existing ontologies, a set of values from which the property "manufacturing company" is able to select should include these three values. Thus, in a case where these three values are not defined in one or more of the existing ontologies, the ontology improvement proposing unit 10 makes an improvement proposal 2603 for the ontologies as shown in Fig. 26 that the undefined values should be added as enumerators.

Additional advantages and modifications will readily occur to those skilled in the art. Therefore, the invention in its broader aspects is not limited to the specific details and representative embodiments shown and described herein. Accordingly, various modifications may be made without departing from the scope of the invention.

**Claims**

1. A dictionary updating apparatus (100) comprising:

   a dictionary storage unit (1) that stores a plurality of dictionaries each of which defines classes and properties representing a semantic structure of meta data;
   a similar/related word storage unit (2) that stores similar/related words that are either similar or related to the classes/properties defined in the dictionaries;
   a search key specifying unit (4) that specifies one or more search keywords used for conducting a search in the dictionaries stored in the dictionary storage unit (1);
   a search history storage unit (5) that stores a history of the search keywords specified by the search key specifying unit (4);
   a frequently-used search-keyword-set detecting unit (8) that detects a frequently-used search-keyword set including classes and properties that are frequently used by a user when conducting a search, based on the history of the search keywords;
   a list generating unit (9) that generates a relationship among all of the classes included in the frequently-used search-keyword set, generates a similar class list by referring to the similar/related words with regard to the generated relationship among the classes, and generates a similar property list by referring to the similar/related words with regard to all of the properties included in the frequently-used search-keyword set;
   an improvement proposal making unit (10) that makes an improvement proposal regarding an element that degrades quality of the classes and the properties constituting the dictionaries, by using the similar class list and the similar property list; and
   a dictionary updating unit (11) that updates a corresponding portion in the dictionaries according to the improvement proposal.

2. The apparatus (100) according to claim 1, wherein the element that degrades the quality of the classes and the properties constituting the dictionaries is one of the following: (i) one or more of the classes and the properties constituting the dictionaries are missing; (ii) one or more of the classes and the properties constituting the dictionaries are abnormal; (iii) the classes and the properties constituting the dictionaries have ununiformity; and (iv) the classes and the properties constituting the dictionaries have irregularity.

3. The apparatus (100) according to claim 1 or 2, wherein the improvement proposal made by the improvement proposal making unit (10) denotes one of the following: (i) a class addition to add a class; (ii) an alias addition to add an alias to a class or to a property; (iii) a definition uniformization to make definitions of similar classes or similar properties uniform between mutually different ones of the dictionaries; (iv) a property addition to add a property; (v) a definition deletion to delete an unnecessary class or an unnecessary property; and (vi) a definition change to change a relationship between classes.

4. A dictionary updating apparatus (100) comprising:

a dictionary storage unit (1) that stores a plurality of dictionaries each of which defines classes and properties representing a semantic structure of meta data;

a similar/related word storage unit (2) that stores similar/related words that are either similar or related to the classes/properties defined_in the dictionaries;

a search key specifying unit (4) that specifies one or more search keywords used for conducting a search in the dictionaries stored in the dictionary storage unit (1);

a search conducting unit (12) that conducts the search in the dictionaries stored in the dictionary storage unit (1), based on the search keywords;

a word detecting/presenting unit (13) that detects and presents similar words and related words that are in correspondence with the search keywords, by referring to the similar/related words stored in the similar/related word storage unit (2);

a selected word re-searching unit (15) that conducts the search again in the dictionaries by using the selected word as a criterion keyword, when one of the presented similar words and the presented related words are selected;

an access history storage unit (19) that stores as an access history the one of the similar words and the related words in correspondence with the search keywords, together with a number of used times;

a frequently-used word-set detecting unit (20) that detects, as a frequently-used word set, a similar word set and a related word set including similar words and related words, respectively that are in correspondence with the search keywords and of which the number of used times is larger than a predetermined threshold value, from the similar words and the related words stored in the access history storage unit (19);

a list generating unit (9) that generates a relationship among the search keywords and the words included in the frequently-used word set, and generates a similar property list by referring to the similar/related words with regard to the generated relationship among the words;

an improvement proposal making unit (10) that makes an improvement proposal regarding an element that degrades quality of the classes and the properties constituting the dictionaries, by using the similar property list; and

a dictionary updating unit (11) that updates a corresponding portion in the dictionaries according to the improvement proposal.

5. The apparatus (100) according to claim 4, further comprising:

a word evaluating unit (17) that evaluates one of a similarity level and a related level by using a result of the search conducted again by the selected word re-searching unit (15); and

an evaluation collecting unit (18) that collects results of the evaluation performed by the word evaluating unit (17) and stores the collected evaluation results into the access history storage unit (19), wherein the improvement proposal making unit (10) submits an improvement proposal for the dictionaries by adding to the improvement proposal, evaluation results obtained by the word evaluating unit (17) that have the same search keywords and the words included in the frequently-used word set.

6. The apparatus (100) according to claim 5, further comprising a corresponding word updating unit (23) that re-calculates the similarity level and the related level with the search keywords that are input or selected by using the evaluation results obtained by the word evaluating unit (17) and stored in the access history storage unit (19), and updates a corresponding one of the similar/related words stored in the similar/related word storage unit (2).

7. The apparatus (100) according to any one of claims 4 to 6, wherein the element that degrades the quality of the classes and the properties constituting the dictionaries is one of the following: (i) one or more of the classes and the properties constituting the dictionaries are missing; (ii) one or more of the classes and the properties constituting the dictionaries are abnormal; (iii) the classes and the properties constituting the dictionaries have ununiformity; and (iv) the classes and the properties constituting the dictionaries have irregularity.

8. The apparatus (100) according to any one of claims 4 to 7, wherein the improvement proposal made by the improvement proposal making unit (10) denotes one of the following: (i) a class addition to add a class; (ii) an alias addition to add an alias to a class or to a property; (iii) a definition uniformization to make definitions of similar classes or similar properties uniform between mutually different ones of the dictionaries; (iv) a property addition to add a property; (v) a definition deletion to delete an unnecessary class or an unnecessary property; and (vi) a definition change to change a relationship between classes.

9. A dictionary updating apparatus (100) comprising:

a dictionary storage unit (1) that stores a plurality of dictionaries each of which defines classes and properties representing a semantic structure of meta data;

a similar/related word storage unit (2) that stores similar/related words that are either similar or related to the classes/properties defined in the dictionaries;

a search key specifying unit (4) that specifies one or more search keywords used for conducting a search in the dictionaries stored in the dictionary storage unit (1);

a search history storage unit (5) that stores a history of the search keywords specified by the search key specifying unit (4);

a frequently-used search-keyword-set detecting unit (8) that detects a frequently-used search-keyword set including classes and properties that are frequently used by a user when conducting a search, based on the history of the search keywords;

a search conducting unit (12) that conducts the search in the dictionaries stored in the dictionary storage unit (1), based on the search keywords;

a word detecting/presenting unit (13) that detects and presents similar words and related words that are in correspondence with the search keywords, by referring to the similar/related words stored in the similar/related word storage unit (2);

a selected word re-searching unit (15) that conducts the search again in the dictionaries by using the selected word as a criterion keyword, when one of the presented similar words and the presented related words are selected;

an access history storage unit (19) that stores as an access history the one of the similar words and the related words in correspondence with the search keywords, together with a number of used times;

a frequently-used word-set detecting unit (20) that detects, as a frequently-used word set, a similar word set and a related word set including similar words and related words, respectively that are in correspondence with the search keywords and of which the number of used times is larger than a predetermined threshold value, from the similar words and the related words stored in the access history storage unit (19);

a list generating unit (9) that detects a common class and a common property each of which is included in both the frequently-used search-keyword set and the frequently-used word set, generates a similar class list by referring to the similar/related words with regard to the detected common class, and generates a similar property list by referring to the similar/related words with regard to the detected common property;

an improvement proposal making unit (10) that makes an improvement proposal regarding an element that degrades quality of the classes and the properties constituting the dictionaries, by using the similar class list and the similar property list; and

a dictionary updating unit (11) that updates a corresponding portion in the dictionaries according to the improvement proposal.

10. The apparatus (100) according to claim 9, further comprising:

a word evaluating unit (17) that evaluates one of a similarity level and a related level by using a result of the search conducted again by the selected word re-searching unit (15); and

an evaluation collecting unit (18) that collects results of the evaluation performed by the word evaluating unit (17) and stores the collected evaluation results into the access history storage unit (19), wherein

the improvement proposal making unit (10) submits an improvement proposal for the dictionaries by adding to the improvement proposal, evaluation results obtained by the word evaluating unit (17) that have the same search keywords and the words included in the frequently-used word set.

11. The apparatus (100) according to claim 10, further comprising a corresponding word updating unit (23) that re-calculates the similarity level and the related level with the search keywords that are input or selected by using the evaluation results obtained by the word evaluating unit (17) and stored in the access history storage unit (19), and updates a corresponding one of the similar/related words stored in the similar/related word storage unit (2).

12. The apparatus (100) according to any one of claims 9 to 11, wherein the element that degrades the quality of the classes and the properties constituting the dictionaries is one of the following: (i) one or more of the classes and the properties constituting the dictionaries are missing; (ii) one or more of the classes and the properties constituting the dictionaries are abnormal; (iii) the classes and the properties constituting the dictionaries have ununiformity; and (iv) the classes and the properties constituting the dictionaries have irregularity.

13. The apparatus (100) according to any one of claims 9 to 12, wherein the improvement proposal made by the improvement proposal making unit (10) denotes one of the following: (i) a class addition to add a class; (ii) an alias addition to add an alias to a class or to a property; (iii) a definition uniformization to make definitions of similar classes or similar properties uniform between mutually different ones of the dictionaries; (iv) a property addition to add a property; (v) a definition deletion to delete an unnecessary class or an unnecessary property; and (vi) a definition change to change a relationship between classes.

14. A dictionary updating apparatus (100) comprising:

   a dictionary storage unit (1) that stores a plurality of dictionaries each of which defines classes and properties representing a semantic structure of meta data;
   a similar/related word storage unit (2) that stores similar/related words that are either similar or related to the classes/properties defined in the dictionaries;
   a search key specifying unit (4) that specifies one or more search keywords used for conducting a search in the dictionaries stored in the dictionary storage unit (1);
   a search history storage unit (5) that stores a history of the search keywords specified by the search key specifying unit (4);
   a frequently-used search-keyword-set detecting unit (8) that detects a frequently-used search-keyword set that is frequently used by a user when conducting a search, based on the history of the search keywords;
   a list generating unit (9) that generates a word list associated with all of the properties included in the frequently-used search-keyword set;
   an improvement proposal making unit (10) that makes an improvement proposal regarding an element that degrades quality of the words associated with the properties, by using the word list associated with the properties; and
   a dictionary updating unit (11) that updates a corresponding portion in the dictionaries according to the improvement proposal.

15. The apparatus (100) according to claim 14, wherein the element that degrades the quality of the words associated with the properties is one of the following: (i) one or more of the words associated with the properties are missing; (ii) one or more of the words associated with the properties are abnormal; (iii) the words associated with the properties have ununiformity; and (iv) the words associated with the properties have irregularity.

16. The apparatus (100) according to claim 14, wherein the improvement proposal made by the improvement proposal making unit (10) is related to one of a data type, a unit, and an enumerator ENUM.

17. A computer program product having a computer readable medium including programmed instructions for updating dictionaries, wherein the instructions, when executed by a computer, cause the computer to perform:

   storing a plurality of dictionaries each of which defines classes and properties representing a semantic structure of meta data;
   storing similar/related words that are either similar or related to the classes/properties defined in the dictionaries;
   specifying one or more search keywords used for conducting a search in the dictionaries;
   storing a history of the search keywords specified in the specifying;
   detecting a frequently-used search-keyword set including classes and properties that are frequently used by a user when conducting a search, based on the history of the search keywords;
   generating a relationship among all of the classes included in the frequently-used search-keyword set, generating a similar class list by referring to the similar/related words with regard to the generated relationship among the classes, and generating a similar property list by referring to the similar/related words with regard to all of the properties included in the frequently-used search-keyword set;
   making an improvement proposal regarding an element that degrades quality of the classes and the properties constituting the dictionaries, by using the similar class list and the similar property list; and
   updating a corresponding portion in the dictionaries according to the improvement proposal.

# FIG.1

CLIENT 300

NETWORK 200

SERVER 100

CLIENT 300

# FIG.2

CPU 101

100, 300

BUS CONTROLLER 109

ROM 102

RAM 103

HDD 104

MEDIUM READING DEVICE 105

110

INPUT UNIT 108

COMMUNICATION CONTROLLING DEVICE 106

200

DISPLAYING UNIT 107

# FIG.3

EP 1 975 817 A2

# FIG.4

{P1, @P2}

C0

C1 {P3, @P4, @P5}

C4 {P6}

C5 {P7}

C2 {P8, @P9}

C3

EXAMPLES OF CLASSES

| CLASS ID | CLASS NAME | CLASS ALIAS | PARENT CLASS | CLASS DEFINITION |
|---|---|---|---|---|
| C0 | C0 | C0' | root | DEFINITION OF C0 |
| C1 | C1 | C1' | C0 | DEFINITION OF C1 |
| C2 | C2 | C2' | C0 | DEFINITION OF C2 |
| C3 | C3 | C3' | C0 | DEFINITION OF C3 |
| C4 | C4 | C4' | C1 | DEFINITION OF C4 |
| C5 | C5 | C5' | C1 | DEFINITION OF C4 |

EXAMPLES OF PROPERTIES

| PROPERTY ID | PROPERTY NAME | DEFINED CLASS | DATA TYPE | UNIT |
|---|---|---|---|---|
| P1 | P1 | C0 | String | |
| P2 | P2 | C0 | Int | Voltage |
| P3 | P3 | C1 | Real | cm |
| P4 | P4 | C1 | Set of {enum1, @enum2, @enum3} | |
| P5 | P5 | C1 | String | |
| P6 | P6 | C4 | date | |
| P7 | P7 | C5 | String | |
| P8 | P8 | C2 | Int | Gigabyte |
| P9 | P9 | C2 | real | Kg |

EP 1 975 817 A2

# FIG.5

```xml
<?xml version='1.0' encoding='UTF-8'?>
<CLASS id="C0" name="C0" superCLASS="root" definition="DEFINITION OF C0">
 <PROPERTY id="p1" name="p1" definition_CLASS="C0" data_type="String"unit=""/>
 <PROPERTY id="p2" name="p2" definition_CLASS="C0" data_type="int"unit="voltage"/>
</CLASS>
<CLASS id="C1" name="C1" superCLASS="C0" definition="DEFINITION OF C1">
 <PROPERTY id="P3" name="P3" definition_CLASS="C1" data_type="real"unit="cm"/>
 <PROPERTY id="P4" name="P4" definition_CLASS="C1" data_type="set
of(enum1,enum2,enum3)"unit=""/>
 <PROPERTY id="P5" name="P5" definition_CLASS="C1" data_type="String"unit=""/>
</CLASS>
<CLASS id="C2" name="C2" superCLASS="C0" definition="DEFINITION OF C2"></CLASS>
...
</xml>
```

# FIG.6

2a

| SOURCE OF KEY | KEY | SIMILAR WORD | WORD TYPE | SOURCE OF SIMILAR WORD | CURRENT SIMILARITY LEVEL |
|---|---|---|---|---|---|
| ONTO 1 | PC | PASOKON | CLASS | ONTO 1 | 100% |
| ONTO 3 | PC | CALCULATOR | CLASS | ONTO 2 | 80% |
| ONTO 3 | PC | PERSONAL COMPUTER | CLASS | THESAURUS | 100% |
| ONTO 3 | PC | ELECTRONIC CALCULATOR | CLASS | THESAURUS | 100% |
| ONTO 3, ONTO 4 | MANUFAC-TURING COMPANY | MANUFACTURE | PROPERTY | ONTO 2 | 80% |
| ONTO 3, ONTO 4 | MANUFAC-TURING COMPANY | MAKER | PROPERTY | ONTO 3 | 80% |
| ONTO 3, ONTO 4 | MEMORY | MEMORY | PROPERTY | ONTO 3 | 80% |
| ONTO 3, ONTO 4 | HD | HARD DISK | PROPERTY | ONTO 2 | 80% |
| ONTO 3 | SERVER | SERVER | CLASS | ONTO 3 | 100% |
| ONTO 2, ONTO 3 | NOTEBOOK PC | NOTEBOOK | CLASS | ONTO 3 | 100% |
| ONTO 3, ONTO 4 | MANUFAC-TURING COMPANY | PRODUCER | PROPERTY | ONTO 2 | 80% |

# FIG.7

2b

| SOURCE OF KEY 1 | KEY1 | RELATED WORD | WORD TYPE | SOURCE OF RELATED WORD | CURRENT RELATED LEVEL |
|---|---|---|---|---|---|
| ONTO 3 | PC | SERVER | CLASS | ONTO 3 | 80% |
| ONTO 1 | PC | MANUFAC-TURING COMPANY | PROPERTY | ONTO 1 | 90% |
| ONTO 2 | PC | MANUFAC-TURER | PROPERTY | ONTO 2, ONTO 1 | 90% |
| ONTO 1 | PC | POWER SOURCE | PROPERTY | ONTO 2 | 90% |

# FIG.8

2b

| SEARCH KEYWORD | RELATED WORD | WORD TYPE | SOURCE OF RELATED WORD | CURRENT RELATED LEVEL |
|---|---|---|---|---|
| C1 | C0 | CLASS | ONTO 1 | 90% |
| C1 | C4 | CLASS | ONTO 1 | 90% |
| C1 | C5 | CLASS | ONTO 1 | 90% |
| C1 | C2 | CLASS | ONTO 1 | 80% |
| C1 | C3 | CLASS | ONTO 1 | 80% |
| C1 | P3 | PROPERTY | ONTO 1 | 90% |
| C1 | P4 | PROPERTY | ONTO 1 | 90% |
| C1 | P5 | PROPERTY | ONTO 1 | 80% |

# FIG.9

| STORE SEARCH KEYWORDS INTO HISTORY | S1 |
| DETECT FREQUENTLY-USED SEARCH-KEYWORD-SETS | S2 |
| OBTAIN RELATIONSHIPS AMONG WORDS BY USING FREQUENTLY-USED KEYWORD SETS | S3 |
| MAKE IMPROVEMENT PROPOSALS | S4 |

# FIG.10

30

| CLASS | PROPERTY | | VALUE | | UNIT (IF SPECIFIED) |
|---|---|---|---|---|---|
| PC<br><br>or<br><br>NOTEBOOK PC | | MAKER | = | TOSHIBA | |
| | and | MEMORY | = | 256 | |
| | or | HD | = | 80 | G |
| | or | VOLTAGE | = | 240 | V |
| | or | PRODUCTION DATE | > | 2006/12 | |

# FIG.11

6

6a

| SEARCH CLASS (KEY1) | SEARCH PROPERTY (KEY2) | NUMBER OF TIMES USED | LAST TIME USED | START TIME OF RECORDING |
|---|---|---|---|---|
| PC, NOTEBOOK PC | MANUFACTURING COMPANY, MEMORY, HD, VOLTAGE, PRODUCTION DATE | 100 | 2006/08/06 | 2006/01/01 |
| PC | MANUFACTURE, MEMORY, HD, VOLTAGE | 20 | 2006/08/09 | 2006/01/01 |
| PC | PRODUCER, MEMORY, HD, VOLTAGE, PRICE | 40 | 2006/08/09 | 2006/01/01 |
| PC, SERVER, CALCULATOR | MANUFACTURING COMPANY | 10 | 2006/08/09 | 2006/01/01 |
| PC, DISPLAY | PC, DISPLAY | 2 | 2006/08/09 | 2006/01/01 |
| NOTEBOOK PC | MEMORY, HD, WEIGHT | 20 | 2006/08/09 | 2006/01/01 |

# FIG.12

P=[MANUFACTURING COMPANY, MEMORY, HD, VOLTAGE, PRODUCTION DATE, MANUFACTURE, PRODUCER, PRICE]

P=[MANUFACTURING COMPANY, MEMORY, WEIGHT]

SIMILAR CLASS LIST: [PC, CALCULATOR]

SIMILAR PROPERTY LIST:
Similar_P= [MANUFACTURING COMPANY, Manufacture, Producer]

EP 1 975 817 A2

# FIG.13

| ONTOLOGY ID | ITEM TYPE | ITEM NAME | IMPROVEMENT PROPOSAL TYPE | IMPROVEMENT PROPOSAL | |
|---|---|---|---|---|---|
| ONTO A | CLASS | PC, CALCULATOR | 5 | DEFINITION DELETION: LEAVE ONLY ONE DEFINITION | 1301 |
| ONTO A | CLASS | PC | 2 | ALIAS ADDITION: CALCULATOR | 1302 |
| ONTO 2, ONTO 3 | CLASS | PC, CALCULATOR | 3 | DEFINITION UNIFORMIZATION | 1303 |
| ONTO A | CLASS | PC | 1 | CLASS ADDITION: SERVER | 1304 |
| ONTO A | CLASS | PC | 6 | DEFINITION CHANGE: CHANGE RELATIONSHIP WITH NOTEBOOK PC | 1305 |
| ONTO A | PROPERTY | MANUFACTURE, PRODUCER | 5 | DEFINITION DELETION: LEAVE ONLY ONE DEFINITION | 1306 |
| ONTO A | PROPERTY | MANUFACTURE | 2 | ALIAS ADDITION: PRODUCER | 1307 |
| ONTO A | PROPERTY | MANUFACTURING COMPANY | 2 | ALIAS ADDITION: MANUFACTURE, PRODUCER | 1308 |
| ONTO 2, ONTO 3, ONTO 4 | PROPERTY | MANUFACTURING COMPANY, PRODUCER, MANUFACTURE | 3 | DEFINITION UNIFORMIZATION | 1309 |
| ONTO B | CLASS | PC | 4 | PROPERTY ADDITION: PRICE | 1310 |

EP 1 975 817 A2

# FIG.14

50

| EXAMPLE OF WORD DISPLAY IN CORRESPONDENCE WITH INPUT |
|---|

PC

51

DID YOU MEAN:
☐ CALCULATOR
☐ PASOKON
☐ PERSONAL COMPUTER
☐ SERVER

52

PROPERTY:
☐ MANUFACTURING COMPANY
☐ MANUFACTURER
☐ POWER SOURCE

SEARCH AGAIN

# FIG.15

# FIG.16

STORE GLOSSARY ACCESS HISTORY — S11

DETECT FREQUENTLY-USED WORD SETS — S12

OBTAIN RELATIONSHIPS AMONG WORDS BY USING FREQUENTLY-USED WORD SETS — S13

MAKE IMPROVEMENT PROPOSALS — S14

# FIG.17

SIMILAR-WORD ACCESS HISTORY

19a

| SEARCH KEYWORD | SIMILAR WORD | SOURCE OF SIMILAR WORD | CURRENT SIMILARITY LEVEL | NUMBER OF TIMES USED | LAST TIME USED | START TIME OF RECORDING |
|---|---|---|---|---|---|---|
| PC | PASOKON | ONTO 1 | 100% | 900 | 2006/08/09 | 2006/01/01 |
| PC | CALCULATOR | ONTO 2 | 80% | 100 | 2006/08/06 | 2006/01/01 |
| PC | PERSONAL COMPUTER | THESAURUS | 100% | 200 | 2006/08/09 | 2006/01/01 |
| NOTEBOOK PC | NOTEBOOK | ONTO 1 | 100% | 300 | 2006/08/09 | 2006/01/01 |

1701

19b

RELATED-WORD ACCESS HISTORY

| SEARCH KEYWORD | RELATED WORD | RELATED-WORD TYPE | SOURCE OF RELATED WORD | CURRENT RELATED LEVEL | NUMBER OF TIMES USED | LAST TIME USED | START TIME OF RECORDING |
|---|---|---|---|---|---|---|---|
| PC | CPU | PROPERTY | ONTO 1 | 90% | 50 | 2006/08/09 | 2006/01/01 |
| PC | MEMORY | PROPERTY | ONTO 2 | 90% | 100 | 2006/08/06 | 2006/01/01 |
| PC | HD | PROPERTY | ONTO 2 | 60% | 200 | 2006/08/09 | 2006/01/01 |
| PC | MANUFACTURING COMPANY | PROPERTY | ONTO 2 | 60% | 200 | 2006/08/09 | 2006/01/01 |
| PC | SERVER | CLASS | ONTO 3 | 80% | 200 | 2006/08/09 | 2006/01/01 |

EP 1 975 817 A2

# FIG.18

PC, PASOKON, PERSONAL COMPUTER

SERVER

60

61

{P}={MEMORY, HD, MANUFACTURING COMPANY}

62

SIMILAR PROPERTY LIST:
Prop_MEMORY={memory}
Prop_HD={HARD DISK}
Prop_MANUFACTURING COMPANY={maker, Manufacture}

EP 1 975 817 A2

# FIG.19

| ONTOLOGY ID | ITEM TYPE | ITEM NAME | IMPROVEMENT PROPOSAL TYPE | IMPROVEMENT PROPOSAL | |
|---|---|---|---|---|---|
| ONTO 2 | CLASS | PC, PASOKON | 5 | DEFINITION DELETION: LEAVE ONLY ONE DEFINITION | ～1901 |
| ONTO 1 | CLASS | PC | 2 | ALIAS ADDITION: PASOKON, PERSONAL COMPUTER, | ～1902 |
| ONTO 1 | CLASS | PC | 1 | CLASS ADDITION: SERVER | ～1903 |
| ONTO 4 | CLASS | PC | 6 | DEFINITION CHANGE: CHANGE RELATIONSHIP WITH SERVER | ～1904 |
| ONTO Y | PROPERTY | MANUFACTURING COMPANY, PRODUCER | 5 | DEFINITION DELETION: LEAVE ONLY ONE DEFINITION | ～1905 |
| ONTO Y | PROPERTY | MANUFACTURING COMPANY | 2 | ALIAS ADDITION: PRODUCER | ～1906 |
| ONTO 1 | CLASS | PC | 4 | ,o,q,n,o,d,q,s,x ADDITION: HD | ～1907 |
| ONTO Y | PROPERTY | MEMORY | 2 | ALIAS ADDITION: MEMORY | ～1908 |
| ONTO 2, ONTO 3 | PROPERTY | MANUFACTURING COMPANY, MANUFACTURE | 3 | DEFINITION UNIFORMIZATION | |

EP 1 975 817 A2

# FIG.20

19c

| SEARCH KEYWORD | SIMILAR WORD | SOURCE OF SIMILAR WORD | USER EVALUATION (0-5) | NUMBER OF TIMES EVALUATED | USER | USER TYPE | START TIME OF RECORDING | |
|---|---|---|---|---|---|---|---|---|
| PC | PASOKON | ONTO 1 | 5 | 10 | A | TYPE 2 | 2006/01/01 | 2001 |
| PC | PASOKON | ONTO 1 | 5 | 6 | CC | TYPE 2 | 2006/01/01 | 2002 |
| PC | PASOKON | ONTO 1 | 4 | 4 | D | TYPE 2 | 2006/01/01 | 2003 |
| PC | CALCULATOR | ONTO 2 | 3 | 10 | B | TYPE 1 | 2006/01/01 | |
| PC | PERSONAL COMPUTER | THESAURUS | 4 | 10 | A | TYPE 2 | 2006/01/01 | |
| NOTEBOOK PC | NOTEBOOK | ONTO 1 | 5 | 12 | C | TYPE 3 | 2006/01/01 | |

EP 1 975 817 A2

# FIG.21

EP 1 975 817 A2

# FIG.22

DETECT MUTUALLY SAME KEYWORDS OUT OF FREQUENTLY-USED SEARCH KEYWORD AND FREQUENTLY-USED WORD SET ── S21

OBTAIN SUM OF FREQUENTLY-USED CLASS SETS ── S22

OBTAIN SUM OF FREQUENTLY-USED PROPERTY SETS ── S23

GENERATE SIMILAR CLASS LIST ── S24

GENERATE SIMILAR PROPERTY LIST ── S25

MAKE IMPROVEMENT PROPOSALS ── S26

# FIG.23

PC, PASOKON, PERSONAL COMPUTER, CALCULATOR ⟍ 70

SERVER NOTEBOOK PC

{P}={MANUFACTURING COMPANY, MEMORY, HD, VOLTAGE, PRODUCTION DATE,
Manufacture, Producer, PRICE, MEMORY, HD}
={MANUFACTURING COMPANY, VOLTAGE, PRODUCTION DATE, PRICE, MEMORY, HD}   71

SIMILAR PROPERTY LIST:
Prop_MEMORY={memory}
Prop_HD={HARD DISK}
Prop_MANUFACTURING COMPANY={maker, Manufacture, Producer}
Prop_VOLTAGE={POWER SOURCE, Power}
Prop_PRODUCTION DATE={}
Prop_PRICE={Price, SALES PRICE}   73

SIMILAR CLASS LIST:
CLASS_PC={PASOKON, CALCULATOR, PERSONAL COMPUTER, ELECTRONIC CALCULATOR}
CLASS_SERVER={Server}
CLASS_NOTEBOOK PC={NOTEBOOK}   72

{P}={MANUFACTURING COMPANY, VOLTAGE, PRODUCTION DATE, PRICE, MEMORY, HD}   74

EP 1 975 817 A2

## FIG.24

| ONTOLOGY ID | ITEM TYPE | ITEM NAME | IMPROVEMENT PROPOSAL TYPE | IMPROVEMENT PROPOSAL | |
|---|---|---|---|---|---|
| ONTO 2 | CLASS | PC,ELECTRONIC CALCULATOR | 5 | DEFINITION DELETION: LEAVE ONLY ONE DEFINITION | 2401 |
| ONTO 1 | CLASS | PC | 2 | ALIAS ADDITION: ELECTRONIC CALCULATOR | 2402 |
| ONTO 1 | CLASS | PC | 2 | ALIAS ADDITION: PASOKON, CALCULATOR, PERSONAL COMPUTER | 2403 |
| ONTO 1 | CLASS | PC | 1 | CLASS ADDITION: NOTEBOOK PC | 2404 |
| ONTO 4 | CLASS | PC | 6 | DEFINITION CHANGE: CHANGE RELATIONSHIP WITH SERVER | 2405 |
| ONTO X | PROPERTY | MANUFACTURING COMPANY,PRODUCER | 5 | DEFINITION DELETION: LEAVE ONLY ONE DEFINITION | 2406 |
| ONTO X | PROPERTY | MANUFACTURING COMPANY | 2 | ALIAS ADDITION: PRODUCER | 2407 |
| ONTO X | CLASS | PC | 4 | PROPERTY ADDITION: HD | 2408 |
| ONTO X | PROPERTY | MEMORY | 2 | ALIAS ADDITION: MEMORY | 2409 |
| ONTO 2, ONTO 3 | PROPERTY | MANUFACTURING COMPANY, MANUFACTURE | 3 | DEFINITION UNIFORMIZATION | |

EP 1 975 817 A2

# FIG.25

6b

| CLASS | PROPERTY | CALCULATION | VALUE | UNIT | NUMBER OF TIMES USED | START TIME OF USE |
|---|---|---|---|---|---|---|
| PC, NOTEBOOK PC | MANUFACTURING COMPANY | = | AAA | | 140 | 2006/01/01 |
| PC, NOTEBOOK PC | MEMORY | = | 256 | | 30 | 2006/01/01 |
| PC, NOTEBOOK PC | HD | = | 80 | G | 140 | 2006/01/01 |
| PC, NOTEBOOK PC | VOLTAGE | = | 240 | V | 30 | 2006/01/01 |
| PC, NOTEBOOK PC | PRODUCTION DATE | > | 2006/12 | | 30 | 2006/01/01 |
| PC | MANUFACTURING COMPANY | = | BBB | | 20 | 2006/01/01 |
| PC, NOTEBOOK PC | MEMORY | = | 512 | | 80 | 2006/01/01 |
| PC, NOTEBOOK PC | VOLTAGE | = | 120 | | 50 | 2006/01/01 |
| PC | MANUFACTURING COMPANY | = | CCC | | 20 | 2006/01/01 |

EP 1 975 817 A2

# FIG.26

| ONTOLOGY ID | ITEM TYPE | ITEM NAME | IMPROVEMENT PROPOSAL TYPE | IMPROVEMENT PROPOSAL | |
|---|---|---|---|---|---|
| ONTO 1 | PROPERTY | MEMORY | DATA TYPE | INTEGER | 2601 |
| ONTO 1 | PROPERTY | VOLTAGE | UNIT | Voltage | 2602 |
| ONTO 2 | PROPERTY | MANUFACTURING COMPANY | ENUM | {AAA, BBB, CCC} | 2603 |

EP 1 975 817 A2

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2007082618 A

- JP 2004078618 A